# EUROPÄISCHE PATENTSCHRIFT

(11) **EP 2 708 478 B1**
(45) Veröffentlichungstag und Bekanntmachung des Hinweises auf die Patenterteilung: **19.11.2014**
(21) Anmeldenummer: 13184952.3
(22) Anmeldetag: 18.09.2013
(51) Int. Cl.: B65G 17/20, B65G 47/61, B65G 19/02

(54) **Tragetasche und Hängefördervorrichtung für den hängenden Transport von Objekten, Schliessmechanismus zum Schliessen dieser Tragetasche**
Carrier bag and overhead conveyor system for suspended transport of objects, closing mechanism for closing this carrier bag
Sac de transport et dispositif de transport suspendu pour le transport suspendu d'objets, mécanisme de fermeture pour la fermeture d'un tel sac

(30) Priorität: 18.09.2012 DE 102012108757
(43) Veröffentlichungstag der Anmeldung: 19.03.2014
(73) Patentinhaber: psb intralogistics GmbH, 66955 Pirmasens (DE)
(72) Erfinder: DIETZ, Lothar, 66955 Pirmasens (DE)
(74) Vertreter: Viering, Jentschura & Partner Patent- und Rechtsanwälte

(56) Entgegenhaltungen:
- EP-A1- 2 418 160
- DE-A1-102008 026 720

## Beschreibung

Die Erfindung betrifft eine Tragetasche für eine Hängefördervorrichtung für den hängenden Transport von Objekten gemäß dem Oberbegriff von Anspruch 1. Die Erfindung betrifft weiter einen Schließmechanismus zum Schließen einer Tragetasche und eine Hängefördervorrichtung.

Eine wie eingangs angegebene Tragetasche ist aus der DE 10 2008 026 720 A1 bekannt. Dieses Dokument offenbart eine Tragetasche gemäß dem Oberbegriff des Anspruch 1. Weitere Tragetaschen sind z.B. aus der DE 10 2010 053 590 A1 oder der DE 10 2004 018 569 A1 bekannt.

Durch die Erfindung wird eine Tragetasche geschaffen, mit welcher das Entladen von Objekten aus der Tragetasche vereinfacht ist.

Durch die Erfindung wird bereitgestellt eine Tragetasche für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an eine Hängefördervorrichtung anhängbar ist, um von der Hängefördervorrichtung hängend transportiert zu werden, wobei der Taschenbeutel einen ersten und einen zweiten, z.B. stofflich voneinander separaten, Beutelabschnitt aufweist, die jeweils einen mit dem Halterahmen verbundenen Beutelendabschnitt und einen von dem Halterahmen abgewandten zweiten Beutelendabschnitt aufweisen, wobei die zweiten Beutelendabschnitte über einen Gelenkmechanismus miteinander verbunden sind, welcher in eine Entladestellung bringbar (mittels Schwenkens um eine Schwenkachse) ist, in welcher die zweiten Beutelendabschnitte in einem Abstand voneinander angeordnet sind, sodass der Taschenbeutel zur Abgabe von Objekten, z.B. zur Abgabe vertikal nach unten, mit einer zwischen den zweiten Beutelendabschnitten gebildeten Auslassöffnung versehen ist, und welcher in eine Beladestellung bringbar (mittels Schwenkens um eine Schwenkachse) ist, in welcher die zweiten Beutelendabschnitte zueinander benachbart angeordnet sind, sodass die Auslassöffnung geschlossen ist und der Taschenbeutel Objekte aufnehmen, d.h. darin/in seinem Inneren halten, kann.

Die Beladestellung des Riegelmechanismus ist einer Tragetasche-Beladestellung zugeordnet, in welcher die Tragetasche mit Objekten beladbar ist, und die Entladestellung des Riegelmechanismus ist einer Tragetasche-Entladestellung zugeordnet, in welcher Objekte aus der Tragetasche entladbar sind.

Der erste und der zweite Beutelabschnitt sind z.B. aus flexiblem Material gemacht, welches z.B. im Wesentlichen unelastisch ist, z.B. aus einem flachen Stoffmaterial, wobei z.B. der erste und der zweite Beutelabschnitt seitlich zwischen den ersten Beutelendabschnitten und den zweiten Beutelendabschnitten nicht miteinander verbunden sind, sodass der Taschenbeutel beidseitig seitlich offen ist. Der erste Beutelabschnitt ist z.B. der in Richtung einer Transport-/Förderrichtung gesehen nachlaufende Beutelabschnitt, und der zweite Beutelabschnitt ist z.B. der in Richtung der Transport-/Förderrichtung gesehen vorlaufende Beutelabschnitt.

Der erste Beutelabschnitt erstreckt sich z.B. ausgehend von dem Halterahmen um eine größere Distanz weg bzw. ist länger als der zweite Beutelabschnitt bzw. erstreckt sich um eine Distanz weiter weg von dem Halterahmen als der zweite Beutelabschnitt. Damit kann z.B. in der Entladestellung des Gelenkmechanismus der zweite Beutelendabschnitt des ersten Beutelabschnitts entsprechend weiter vertikal unterhalb des zweiten Beutelendabschnitts des zweiten Beutelabschnitts liegen, bzw. liegt z.B. in der Entladestellung des Gelenkmechanismus der Beutelendabschnitt des ersten Beutelabschnitts entsprechend (um die (Differenz-Distanz/Länge) weiter vertikal unterhalb des zweiten Beutelendabschnitts des zweiten Beutelabschnitts, und in der Beladestellung des Gelenkmechanismus, bei zueinander benachbart angeordneten zweiten Beutelendabschnitten, kann z.B. ein Boden der Tragetasche ausschließlich von dem ersten Beutelabschnitt, z.B. ausschließlich von dem zweiten Beutelendabschnitt des ersten Beutelabschnitts, gebildet sein. Damit kann eine von einem Objekt auf den Boden der Tragetasche ausgeübte Last derart auf den ersten Beutelabschnitt bzw. auf den zweiten Beutelendabschnitt des ersten Beutelabschnitts wirken, dass dieser in Richtung der Entladestellung (des Gelenkmechanismus) bzw. in Richtung eines Öffnens der Auslassöffnung vorbelastet ist/wird.

Die Beladestellung des Gelenkmechanismus stellt auch gleichzeitig die Transportstellung des Gelenkmechanismus dar, in welcher die Tragetasche von der Hängefördervorrichtung, an dieser hängend, transportierbar ist bzw. transportiert wird. Die Transportstellung des Gelenkmechanismus ist einer Tragetasche-Transportstellung zugeordnet, in welcher die Tragetasche in der Regel transportiert wird, wenn sie z.B. nicht in einer Beladestation der Hängefördervorrichtung ist, in welcher die Tragetasche z.B. in ihre Tragetasche-Beladestellung gebracht ist, und wenn sie z.B. nicht in einer Entladestation der Hängefördervorrichtung ist, in welcher die Tragetasche z.B. in ihre Tragetasche-Entladestellung gebracht ist.

Die Auslassöffnung ist z.B. an einem von dem Halterahmen entgegengesetzten Ende des Taschenbeutels ausgebildet, wobei der Halterahmen vertikal oben und die Auslassöffnung vertikal darunter angeordnet sind.

Der Halterahmen ist z.B. in eine Halterahmen-Beladestellung, welche einer Tragetasche-Beladestellung zugeordnet ist, schwenkbar, z.B. um eine sich quer zur Transportrichtung bzw. zur Transportbahn sich erstreckende Schwenkachse, in welcher Halterahmen-Beladestellung der Halterahmen z.B. in eine im Wesentlichen horizontale Position geschwenkt ist, d.h. eine von dem Halterahmen umgebene/definierte Halterahmenöffnung erstreckt sich dann im Wesentlichen horizontal, wobei die Halterahmenöffnung dann z.B. die Einführ-/Beladeöffnung in den Taschenbeutel definiert. Nachdem Beladen der Tragetasche bzw. deren Taschenbeutels kann der Halterahmen z.B. in eine im Wesentlichen vertikale Position zurückgeschwenkt werden (d.h., die Halterahmenöffnung erstreckt sich im Wesentlichen vertikal) und/oder wird aufgrund der auf den Halterahmen wirkenden Kraft, die von dem beladenen Taschenbeutel darauf ausgeübt wird, in die im Wesentlichen vertikale Position zurückgeschwenkt, sodass die von dem Halterahmen definierte Halterahmenöffnung z.B. von dem zweiten Beutelabschnitt, z.B. von dessen ersten Beutelendabschnitt, abgedeckt und damit verschlossen wird. In dieser vertikal nach unten geschwenkten Position des Halterahmens ist der Halterahmen z.B. in einer Tragetasche-Transportstellung.

Zum Entladen des Taschenbeutels kann mittels des Gelenkmechanismus einfach die Auslassöffnung geöffnet werden, wodurch das Objekt z.B. einfach nach unten hin aus dem Taschenbeutel entnehmbar ist, wobei die Auslassöffnung z.B. derart ausgebildet ist, dass das Objekt z.B. einfach/nur via Schwerkraft durch die geöffnete Auslassöffnung fallen kann.

Der Gelenkmechanismus kann z.B. einen Riegelmechanismus aufweisen, von welchem der Gelenkmechanismus in seiner/der Beladestellung lösbar verriegelbar ist, um die Auslassöffnung in der Beladestellung verriegelt geschlossen zu halten. Wie oben erläutert, kann der zweite Endabschnitt des ersten Beutelabschnitts von einem im Taschenbeutel aufgenommenen Objekt derart belastet sein, dass der zweite Endabschnitt des ersten Beutelabschnitts in Richtung weg vom zweiten Endabschnitt des zweiten Beutelabschnitts belastet wird. Der Riegelmechanismus verhindert ein ungewolltes Freigeben/Öffnen der Auslassöffnung, auch bei wie vorausgehend belastetem zweitem Endabschnitt des ersten Beutelabschnitts.

Der Gelenkmechanismus kann einen Schwenkhebel, z.B. einen langgestreckten Schwenkhebel mit einem ersten Hebelendabschnitt, der mit dem zweiten Beutelendabschnitt des ersten Beutelabschnitts verbunden ist, z.B. direkt mit dem zweiten Beutelendabschnitt des ersten Beutelabschnitts verbunden, z.B. schwenkbar verbunden, ist, und mit einem zweiten Hebelendabschnitt, der mit dem zweiten Beutelendabschnitt des zweiten Beutelabschnitts schwenkbar verbunden, z.B. direkt oder indirekt über ein Verbindungselement (wird unten noch weiter erläutert) mit dem zweiten Beutelendabschnitt des zweiten Beutelabschnitts verbunden ist, aufweisen wobei der Schwenkhebel zwischen einer der Entladestellung (des Gelenkmechanismus) zugeordneten Entladeschwenkstellung und einer der Beladestellung (des Gelenkmechanismus) zugeordneten Beladeschwenkstellung hin und her schwenkbar ist, und/oder wobei der Gelenkmechanismus einen ersten und einen zweiten (z.B. jeweils langgestreckten) Schwenkhebel aufweist, die auf einander gegenüberliegenden (bzw. quer zur Transportrichtung oder zu einer die Transportrichtung definierenden Transportbahn der Hängefördervorrichtung einander gegenüberliegenden) seitlichen Seiten des Taschenbeutels angeordnet sind und jeweils einen ersten Hebelendabschnitt aufweisen, der mit dem zweiten Beutelendabschnitt des ersten Beutelabschnitts verbunden, z.B. direkt verbunden, z.B. schwenkbar verbunden, ist, und einem zweiten Hebelendabschnitt, der mit dem zweiten Beutelendabschnitt des zweiten Beutelabschnitts schwenkbar verbunden ist, z.B. direkt oder indirekt über ein Verbindungselement (wird unten noch weiter erläutert) mit dem zweiten Beutelendabschnitt des zweiten Beutelabschnitts verbunden ist, wobei der erste und der zweite Schwenkhebel zwischen einer der Entladestellung (des Gelenkmechanismus) zugeordneten Entladeschwenkstellung und einer der Beladestellung (des Gelenkmechanismus) zugeordneten Beladeschwenkstellung hin und her schwenkbar sind.

Der jeweilige Schwenkhebel (d.h. z.B. der erste und der zweite Schwenkhebel) ist(sind) z.B. in der/seiner(ihrer) Beladeschwenkstellung bzw. in der Beladestellung des Gelenkmechanismus an dem zweiten Beutelendabschnitt des zweiten Beutelabschnitts über einen jeweiligen Riegelmechanismus lösbar verriegelbar bzw. lösbar verriegelt, um die Auslassöffnung in der Beladestellung (des Gelenkmechanismus) verriegelt geschlossen zu halten.

Der jeweilige Riegelmechanismus weist z.B. einen am ersten Hebelendabschnitt angeordneten, bewegbaren Sperrriegel auf, welcher z.B. mit einem seitlich vorragenden/vorstehenden Entriegelungsvorsprung versehen ist, an welchem ein Entriegelungsmitnehmer zum Bewirken einer Entriegelungsbewegung des Sperrriegels angreifen kann. Das heißt, der Sperrriegel ist mit dem Entriegelungsvorsprung mitbewegbar.

Der Sperrriegel ist z.B. mittels einer Feder, z.B. einer Schraubenfeder, einer Gummifeder oder eines sonstigen elastischen Elements, in Richtung der Verriegelung federvorgespannt. Der Entriegelungsmitnehmer kann von einer Entriegelungs-Kulisse/Entriegelungs-Führungskulisse ausgebildet sein, entlang welcher der Entriegelungsvorsprung beim Fördern/Transportieren der Tragetasche in/von der Hängefördervorrichtung sich geführt bewegt/bewegt wird, z.B. gleitet, wodurch der Entriegelungsvorsprung zusammen mit dem Sperrriegel entgegen der Federvorspannkraft der Feder bewegt werden zum Entriegeln des Gelenkmechanismus bzw. des jeweiligen Schwenkhebels.

An dem zweiten Beutelendabschnitt des zweiten Beutelabschnitts kann z.B. ein jeweiliger seitlicher Sperrvorsprung ausgebildet sein, mit welchem der jeweilige Sperrriegel in der Beladestellung (des Gelenkmechanismus) im Eingriff ist, um die Auslassöffnung in der Beladestellung (des Gelenkmechanismus) verriegelt geschlossen zu halten. Der jeweilige seitliche Sperrvorsprung ist damit z.B. Bestandteil des jeweiligen Riegelmechanismus. Beim Verriegeln des Verriegelungsmechanismus bzw. bei Schließen der Auslassöffnung des Taschenbeutels wird z.B. der jeweilige Schwenkhebel (aktiv und z.B. automatisiert/automatisch) in seine Beladeschwenkstellung geschwenkt, wobei hierbei z.B. der jeweilige seitliche Sperrvorsprung automatisch den jeweils zugehörigen federvorgespannten Sperrriegel entgegen der Federvorspannkraft wegdrückt. Dies kann z.B. durch eine entsprechende Schrägfläche am Sperrriegel und/oder am Sperrvorsprung erreicht werden. Nachdem überlaufen des jeweiligen Sperrriegels durch den jeweiligen Sperrvorsprung schnappt der Sperrriegel wieder zurück, wobei eine Rückschwenkung des jeweiligen Schwenkhebels durch den nunmehr vom Sperrvorsprung behinderten Sperrriegel verhindert ist, weil z.B. hinsichtlich der Rückschwenkrichtung z.B. keine Schrägfläche am Sperrriegel und/oder am Sperrvorsprung ausgebildet ist. Zum Zurückschwenken des Schwenkhebels muss daher zunächst mittels einer zusätzlichen Entriegelungseinrichtung eine Entriegelungskraft auf den Sperrriegel entgegen der Federkraft ausgeübt werden, um den Sperrriegel von dem Sperrvorsprung zu entriegeln, wobei die Entriegelungseinrichtung z.B. den oben erläuterten Entrieglungsmitnehmer aufweist, der in Form der ebenfalls oben erläuterten Entriegelungs-Kulisse ausgebildet ist.

Der jeweilige Schwenkhebel (d.h. z.B. der erste und der zweite Schwenkhebel) ist(sind jeweilig) z.B. mit seinem(ihrem) zweiten Hebelendabschnitt über ein (jeweiliges, z.B. einem ersten und einem zweiten) Verbindungselement mit dem zweiten Beutelabschnitt (indirekt) verbunden, wobei das (jeweilige) Verbindungselement mit einem ersten Verbindungselementendabschnitt mit dem zweiten Beutelendabschnitt (direkt) verbunden ist und mit einem zweiten Verbindungselementendabschnitt schwenkbar mit dem zweiten Hebelendabschnitt (direkt) verbunden ist. Das jeweilige Verbindungselement kann z.B. eine Verbindungsstange oder Verbindungslasche sein. Die oben erwähnte Distanz, um welche der erste Beutelabschnitt sich weiter von dem Halterahmen wegerstreckt bzw. länger ist als der zweite Beutelabschnitt, kann z.B. im Wesentlichen gleich der Länge des Verbindungselements (Längenmaß zwischen dem ersten und dem zweiten Verbindungselementabschnitt) sein, sodass in der Entladestellung (des Gelenkmechanismus) eine/die Schwenkachse (welche sich z.B. quer zur Transportrichtung bzw. Transportbahn erstreckt) zwischen dem zweiten Hebelendabschnitt des jeweiligen Schwenkhebels und dem jeweiligen Verbindungselement (vertikal) im Wesentlichen auf Höhe einer/der Schwenkachse (welche sich z.B. quer zur Transportrichtung bzw. Transportbahn erstreckt) zwischen dem ersten Hebelendabschnitt und dem zweiten Endabschnitt des ersten Beutelabschnitts liegt, sodass der Schenkhebel in seiner Entladeschwenkstellung bzw. in der Entladestellung des Gelenkmechanismus im Wesentlichen horizontal verläuft (hinsichtlich einer durch den ersten und zweiten Hebelendabschnitt verlaufenden Linie). Anders ausgedrückt kann die Distanz, um welche sich der erste Beutelabschnitt ausgehend von dem Halterahmen weiter weg erstreckt als der zweite Beutelabschnitt, im Wesentlichen gleich dem Abstand zwischen dem ersten Verbindungselementendabschnitt und dem zweiten Verbindungselementendabschnitt des jeweiligen Verbindungselements sein.

Der erste und der zweite Schwenkhebel können drehfest miteinander verbunden sein, wobei optional der erste und der zweite Schwenkhebel über einen Verbindungsschaft, z.B. in Form einer Stange, welcher sich durch einen vom ersten Beutelabschnitt gebildeten Aufnahmetunnel erstreckt und welcher die Drehachse zwischen dem ersten Beutelabschnitt und dem ersten und dem zweiten Schwenkhebel definiert, drehfest miteinander verbunden sind.

Der jeweilige, oben erläuterte Sperrvorsprung kann z.B. am ersten Verbindungselementendabschnitt angeordnet und/oder ausgebildet sein und kann z.B. die (jeweilige) Verlängerung eines Halteschafts, z.B. in Form einer Haltestange, sein, welcher sich durch einen vom zweiten Beutelendabschnitt des zweiten Beutelabschnitts gebildeten Aufnahmetunnel erstreckt und an welchem das jeweilige Verbindungselement angebracht ist. Die Verriegelung des jeweiligen Schwenkhebels kann z.B. auch durch eine benachbart zu einem Gelenk zwischen dem zweiten Hebelendabschnitt des jeweiligen Schwenkhebels und dem zweiten Verbindungselement des jeweiligen Verbindungselements vorgesehene Riegeleinrichtung ausgebildet sein, wobei z.B. ein federvorgespannter Vorsprung, z.B. Stift, in der Beladeschwenkstellung des jeweiligen Schwenkhebels das zugehörige Verbindungselement auf der von einer Endladeschwenkrichtung (Schwenkrichtung, in die der Schwenkhebel in die Endladeschwenkstellung schwenkt) abgewandten Seite hintergreift oder in des Verbindungselement eingreift.

Der jeweilige Aufnahmetunnel kann durch Umfalten und festes Verbinden, z.B. mittels Nähens, des zweiten Beutelabschnittendes bzw. des zweiten Beutelendaschnitts des ersten und/oder des zweiten Beutelabschnitts am vorausgehenden Abschnitt des ersten bzw. zweiten Beutelabschnitts erzeugt sein. Der Verbindungsschaft und/oder der Halteschaft können einfach lose in den Aufnahmetunnel eingesetzt sein.

Der jeweilige Schwenkhebel kann z.B. in der Beladestellung (des Gelenkmechanismus) bzw. in der Beladeschwenkstellung im Wesentlichen vertikal und/oder in der Entladestellung (des Gelenkmechanismus) bzw. in der Entladeschwenkstellung im Wesentlichen horizontal verlaufen, und/oder das jeweilige Verbindungseleement kann z.B. in der Entladestellung (des Gelenkmechanismus) und in der Beladestellung (des Gelenkmechanismus) bzw. in der Entladeschwenkstellung und in der Beladeschwenkstellung im Wesentlichen vertikal verlaufen. (Die Richtungsangaben beziehen sich auf die Lage/den Verlauf einer Linie durch den ersten und den zweiten Hebelendabschnitt bzw. auf eine Linie durch den ersten und den zweiten Verbindungselementendabschnitt und beziehen sich auf einen Zustand, in welchem die Tragetasche an der Hängefördervorrichtung hängt/angehängt ist.)

Der zweite Beutelendabschnitt des ersten Beutelabschnitts kann an seinen Seitenrändern mit einer jeweiligen Seitenwand versehen sein, wobei in der Beladestellung (der Tragetasche) bzw. in der Beladeschwenkstellung des jeweiligen Schwenkhebels von dem zweiten Beutelendabschnitt des ersten Beutelabschnitts und den Seitenwänden eine Aufnahmewanne ausgebildet ist.

Durch die Erfindung wird ferner ein Schließmechanismus zum Schließen einer wie in dieser Anmeldung beschriebenen Tragetasche bereitgestellt, mit einer ersten Backe und einer zweiten Backe, die einander gegenüberliegend angeordnet sind (z.B. bezüglich einer/der Transportbahn der Hängefördervorrichtung) und die jeweils einen Aufnahmekanal aufweisen, in welchen der erste und der zweite Schwenkhebel beim Transportieren/Fördern (durch die/in der Hängefördervorrichtung) der Tragetasche einfahren können, z.B. in eine Aufnahmekanallängsrichtung einfahren können, um darin (im jeweiligen Aufnahmekanal) aufgenommen zu sein, und einer Dreheinrichtung, von welcher die erste Backe und die zweite Backe synchron miteinander um eine gemeinsame (fiktive) Drehachse drehbar sind, um die in den Aufnahmekanälen aufgenommenen Schwenkhebel in die Beladeschwenkstellung zu schwenken.

Der jeweilige Aufnahmekanal ist z.B. in Richtung zu der jeweiligen anderen Backe offen und ist z.B. in seiner Aufnahmekanallängsrichtung an seinen beiden Längsenden offen.

Bei wie oben im Wesentlichen horizontal verlaufenden/liegenden Schwenkhebeln in der Entladeschwenkstellung bzw. der Entladestellung (des Gelenkmechanismus) befinden sich die erste und die zweite Backe z.B. zunächst in einer solchen Ausgangsstellung, bei der der jeweilige Aufnahmekanal sich (mit seiner Aufnahmekanallängsrichtung) ebenfalls horizontal erstreckt, sodass im Zuge des Hängetransports der Tragetasche der erste und der zweite Schwenkhebel einfach und sanft in den jeweils zugehörigen Aufnahmekanal längs einfahren können. Der jeweilige Schwenkhebel ist z.B. aus Kunststoff, sodass er z.B. mit verringerter Reibung durch die jeweilige Backe gleiten kann.

Der Schließmechanismus kann z.B. mit einer Steuervorrichtung verbunden bzw. gekoppelt sein, welche erkennt/erkennen kann, wenn das jeweilige Schwenkgelenk (bzw. die davon definierte Drehachse) zwischen z.B. dem jeweiligen Schwenkhebel (bzw. dessen zweitem Hebelendabschnitt) und dem zweiten Beutelabschnitt (welche Schwenkgelenke koaxial zueinander sind) oder z.B. zwischen dem jeweiligen Schwenkhebel (bzw. dessen zweitem Hebelendabschnitt) und dem Verbindungselement (bzw. dessen zweitem Verbindungselementendabschnitt) mit der Drehachse der ersten und der zweiten Backe fluchtet, wobei dann die Steuervorrichtung die Dreheinrichtung zum Drehen der Backen zum Schwenken der/des Schwenkhebels um das vorausgehend angegebene Schwenkgelenk in die Beladeschwenkstellung bzw. in die Beladestellung (des Gelenkmechanismus) (und damit zum Schließen der Auslassöffnung) ansteuert.

Die Dreheinrichtung ist derart ausgebildet, dass die erste und die zweite Backe beim Schwenken des jeweiligen Schwenkhebels eine Schwenkbewegung von über 90°, optional über 100°, optional über 100° und kleiner gleich 115° durchführen. Dies soll auch umfassen, dass die Steuervorrichtung derart ausgebildet, dass von ihr die Dreheinrichtung derart angesteuert wird, dass die erste und die zweite Backe beim Schwenken des jeweiligen Schwenkhebels eine Schwenkbewegung von über 90°, optional über 100°, optional über 100° und kleiner gleich 115° durchführen.

Durch die Erfindung wird weiter eine Hängefördervorrichtung für den hängenden Transport von Objekten in Tragetaschen bereitgestellt, mit einer Transportbahn (welche eine/die Transportrichtung definiert), einer Mehrzahl von wie in dieser Anmeldung beschriebenen Tragetaschen, die an der Transportbahn angehängt sind, und einer Mitnehmereinrichtung mit Mitnehmern, die an den Aufhängeelementen der Tragetaschen angreifen können, z.B. direkt oder indirekt, um die Tragetaschen entlang der Transportbahn mitzunehmen.

Die Hängefördervorrichtung kann z.B. einen wie in dieser Anmeldung beschriebenen Schließmechanismus aufweisen und auch die damit verbundene Steuervorrichtung.

Die Erfindung wird nachfolgend anhand von Ausführungsformen mit Bezugnahme auf die Zeichnung erläutert. In der Zeichnung zeigen:
Figur 1 eine schematische Darstellung einer Hängefördervorrichtung mit einer Tragetasche in Entladestellung gemäß einer Ausführungsform der Erfindung in Seitenansicht,
Figur 2 eine schematische Darstellung der Tragetasche von Figur 1 von innen her in Frontansicht gemäß dem Pfeil "Ansicht 1" von Figur 1,
Figur 3 eine schematische Darstellung der Tragetasche von Figur 1 von innen her in Frontansicht gemäß dem Pfeil "Ansicht 2" von Figur 1,
Figur 4 eine schematische Darstellung der Tragetasche von Figur 1 von innen her in Draufsicht gemäß dem Pfeil "Ansicht 3" von Figur 1,
Figur 5 eine Schnittansicht entlang der in Figur 1 mit A-A bezeichneten Linie,
Figur 6 eine Schnittansicht entlang der in Figur 1 mit B-B bezeichneten Linie,
Figur 7 eine schematische Darstellung des Halterahmens der Tragetasche von Figur 1 in Draufsicht gemäß dem Pfeil "Ansicht 4" von Figur 3,
Figur 8 die Detailansicht "A" von Figur 3,
Figur 9 eine schematische Darstellung der Tragetasche von Figur 1 in Beladestellung in Seitenansicht,
Figur 10 eine schematische Darstellung der Tragetasche von Figur in Transportstellung in Seitenansicht,
Figur 11 eine schematische Darstellung eines Schließmechanismus zum Schließen einer Tragetasche gemäß einer Ausführungsform der Erfindung,
Figur 12 eine schematische Darstellung des Schließmechanismus von Figur 12 in der Draufsicht,
Figur 13 eine Schnittansicht entlang der in Figur 11 mit A-A bezeichneten Linie,
Figur 14 eine Schnittansicht entlang der in Figur 11 mit B-B bezeichneten Linie,
Figuren 15 und 16 schematische Darstellungen des Schließmechanismus von Figur 12 in Seitenansicht, erläuternd den Schließvorgang zum Schließen der Tragetasche.

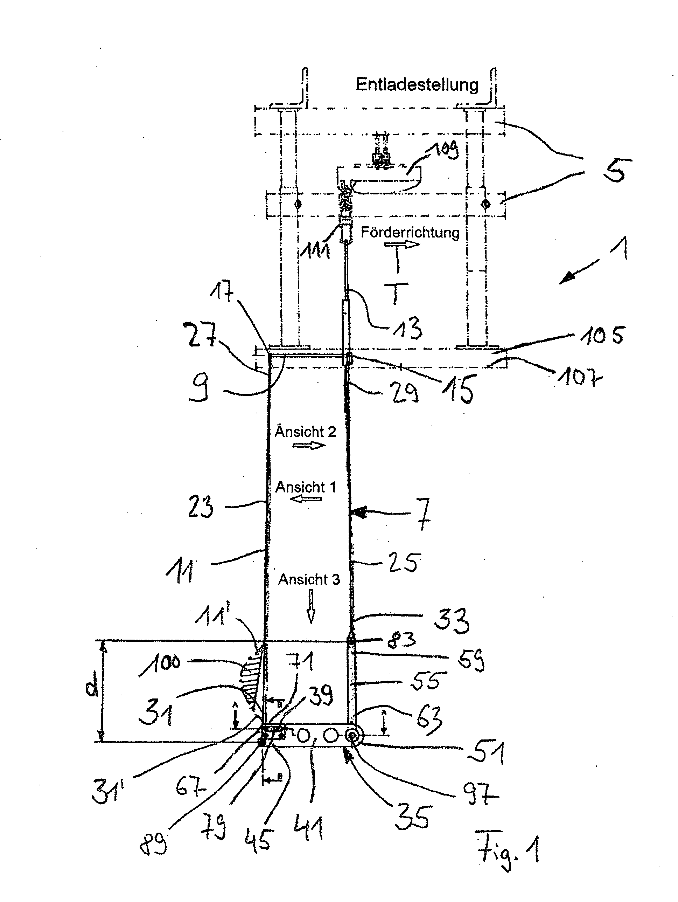

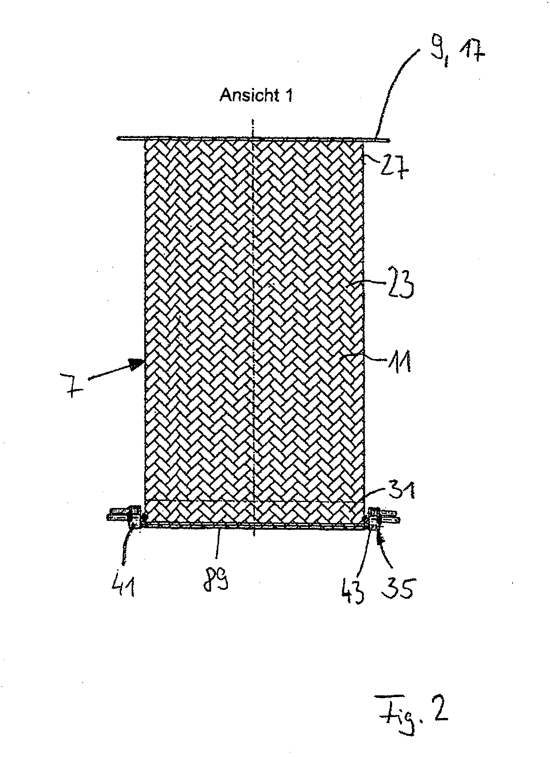

Die Figuren 1-10 zeigen schematische Darstellungen einer Hängefördervorrichtung 1 zum hängenden Transport/Fördern von Objekten 3 in an einer Transportbahn/Förderbahn 5 der Hängefördervorrichtung 1 hängenden Tragetaschen 7 (nur eine Tragetasche 7 ist in den Figuren jeweils dargestellt) entlang einer von der Transportbahn 5 definierten Transportrichtung/Förderrichtung T.

Die jeweilige Tragetasche 7 weist auf einen Halterahmen 9, einen Taschenbeutel 11, der am Halterahmen 9 fest angebracht ist und daran hängt und von dem die zu transportierenden Objekte 3 aufnehmbar sind, und ein Aufhängelement 13, welches in dieser Ausführungsform in Form eines Hakens und/oder mit einem Haken ausgebildet ist, welches mit dem Halterahmen 9 verbunden ist und mittels dessen die Tragetasche 7 an die Transportbahn 5 angehängt ist, um von der Hängefördervorrichtung 1 hängend entlang der Transportrichtung T transportiert/gefördert zu werden.

Die zu transportierenden Objekte 3 können z.B. Kleidungsstücke, Boxen, wie z.B. Kartons, mit darin eingebrachten Teilen, wie z.B. Kleidungsstücken, Schuhen oder Maschinenelementen, etc. sein.

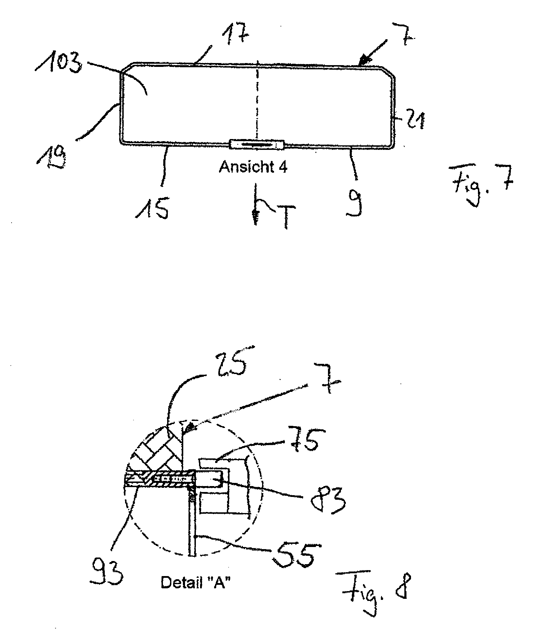

Der Halterahmen 9 hat z.B. in dieser Ausführungsform eine im Wesentlichen rechteckige Gestalt und ist quer zur Transportrichtung T langgestreckt ausgebildet. Der Halterahmen 9 hat (siehe z.B. Figur 7) einen bezüglich der Transportrichtung T gesehen vorlaufenden Rahmenschenkel 15 und einen zum vorlaufenden Rahmenschenkel 15 parallel verlaufenden, nachlaufenden Rahmenschenkel 17, die sich mit ihrer Längsrichtung quer zur Transportrichtung T bzw. zur Transportbahn 5 erstreckn, sowie einen ersten und einen zweiten Verbindungs-Rahmenschenkel 19, 21, welche sich mit ihrer Längsrichtung in die Transportrichtung T erstrecken und welche den vorlaufenden und den nachlaufenden Rahmenschenkel 15, 17 an deren Längsenden miteinander verbinden. Der Halterahmen 9 ist damit in dieser Ausführungsform z.B. als geschlossener Halterahmen ausgeführt. Das Aufhängeelement 13 ist am vorlaufenden Rahmenschenkel 15 angebracht und zwar z.B. um den vorlaufenden Rahmenschenkel 15 drehbar, sodass z.B. der Halterahmen 9 um eine von dem vorlaufenden Rahmenschenkel 15 definierte Schwenkachse, die quer zur Transportrichtung T bzw. quer zur Transportbahn 5 verläuft, schwenkbar ist, und zwar, wie weiter unten noch im Detail erläutert, z.B. zwischen einer Halterahmen-Beladestellung, welche auch eine Halterahmen-Entladestellung sein kann, und einer Halterahmen-Transportstellung, welche auch eine Halterahmen-Entladestellung sein kann.

Der (jeweilige) Taschenbeutel 11 weist einen ersten, z.B. nachlaufenden, Beutelabschnitt 23 und einen zweiten, z.B. vorlaufenden, Beutelabschnitt 25 auf, die z.B. aus einer flexiblen aber im Wesentlichen unelastischen Stoffbahn gebildet sind, wobei ein oberer Beutelendabschnitt 27 des ersten Beutelabschnitts 23 an dem nachlaufenden Rahmenschenkel 17 angebracht ist, z.B. direkt angebracht ist. Hierzu ist z.B. der obere Beutelendabschnitt 27 des ersten Beutelabschnitts 23 unter Ausbildung eines Aufnahmetunnels umgefaltet, in welchem der nachlaufende Rahmenschenkel 17 aufgenommen ist. Ein oberer Beutelendabschnitt 29 des zweiten Beutelabschnitts 25 ist an dem vorlaufenden Rahmenschenkel 15 z.B. direkt, angebracht. Hierzu ist z.B. der obere Beutelendabschnitt 29 des zweiten Beutelabschnitts 25 unter Ausbildung eines Aufnahmetunnels umgefaltet, in welchem der vorlaufende Rahmenschenkel 15 aufgenommen ist.

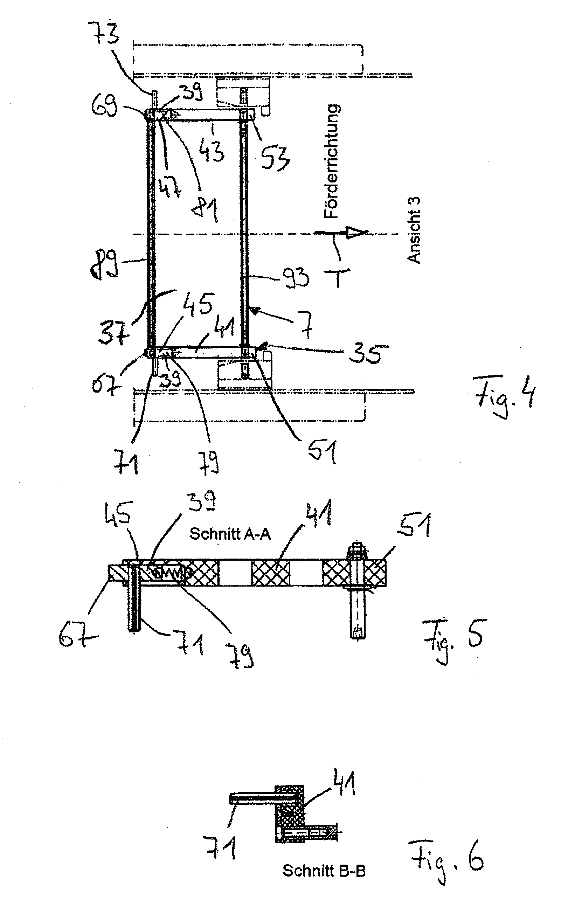

Der erste und der zweite Beutelabschnitt 23, 25 haben jeweils einen zweiten, von dem Halterahmen 9 abgewandten Beutelendabschnitt 31, 33, welche zweiten Beutelendabschnitte 31, 33 über einen Gelenkmechanismus 35 miteinander verbunden sind, welcher schwenkend/via Schwenken in eine Entladestellung bringbar ist (siehe Fig. 1), in welcher die zweiten Beutelendabschnitte 31, 33 in einem Abstand voneinander angeordnet sind, sodass der Taschenbeutel 7 zur Abgabe bzw. zum Auslassen von in dem Taschenbeutel 7 aufenommenen Objekten 3 mit einer zwischen den zweiten Beutelendabschnitten 31, 33 gebildeten Auslassöffnung 35 versehen ist (siehe Fig. 4), und welcher schwenkend/via Schwenken in eine Beladestellung bringbar ist (siehe Fig. 5), in welcher die zweiten Beutelendabschnitte 31, 33 zueinander benachbart angeordnet sind, sodass die Auslassöffnung 37 geschlossen ist und der Taschenbeutel 7 die Objekte 3 sicher aufnehmen kann.

Der erste und der zweite Beutelabschnitt 23, 25 sind an ihren seitlichen Rändern, welche sich zwischen dem ersten und dem zweiten Beutelendabschnitt 27, 31 bzw. 29, 33 des jeweiligen Beutelabschnitts 23, 25 erstrecken, nicht miteinander verbunden, sodass der Taschenbeutel 7 beidseitig seitlich offen ist.

Der Gelenkmechanismus 35 weist einen Riegelmechanismus 39 auf, von welchem der Gelenkmechanismus 35 in seiner/der Beladestellung lösbar verriegelbar bzw. verriegelt ist, um die Auslassöffnung 37 in der Beladestellung (des Gelenkmechanismus) verriegelt geschlossen zu halten.

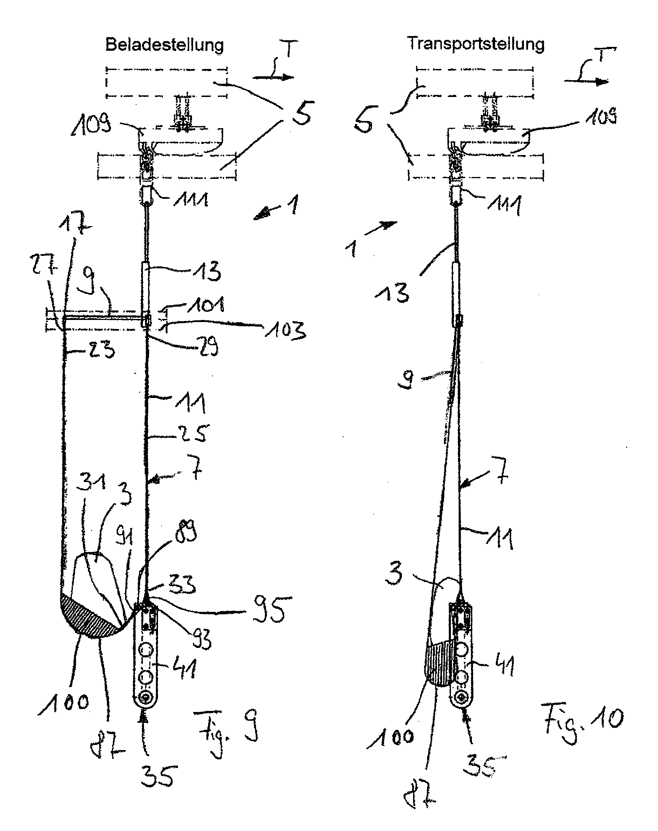

Der Gelenkmechanismus 35 weist in dieser Ausführungsform z.B. einen ersten und einen zweiten (starren) Schwenkhebel 41, 43 auf, die auf einander gegenüberliegenden Seiten (bezüglich der Transportrichtung T bzw. bezüglich der Transportbahn 5) des Taschenbeutels 7 angeordnet sind und jeweils aufweisen einen ersten Hebelendabschnitt 45 bzw. 47, der mit dem zweiten Beutelendabschnitt 31 des ersten Beutelabschnitts 23 schwenkbar verbunden ist, und einem zweiten Hebelendabschnitt 51, 53, der mit dem zweiten Beutelendabschnitt 33 des zweiten Beutelabschnitts 25 schwenkbar verbunden ist, wobei der erste und der zweite Schwenkhebel 41, 43 zwischen einer der Entladestellung (des Gelenkmechanismus 35) zugeordneten Entladeschwenkstellung (siehe Fig. 1) und einer der Beladestellung (des Gelenkmechanismus) zugeordneten Beladeschwenkstellung (siehe Figuren 9 und 10) hin und her schwenkbar sind.

Der erste Beutelabschnitt 23 erstreckt sich ausgehend von dem Halterahmen 9 um eine Distanz d weiter weg bzw. ist um diese Distanz d länger als der zweite Beutelabschnitt 25. Der jeweilige bzw. der erste und der zweite Schwenkhebel 41, 43 ist bzw. sind mit seinem bzw. ihrem zweiten Hebelendabschnitt 51, 53 über ein (jeweiliges bzw. ein erstes und ein zweites) Verbindungselement 55, 57, welches z.B. langgestreckt ist und z.B. in Form einer Stange oder einer Lasche ausgebildet ist, mit dem zweiten Beutelabschnitt 25 bzw. mit dessen zweitem Beutelendabschnitt 33 verbunden, wobei das (jeweilige) Verbindungselement 55, 57 mit einem (jeweiligen) ersten Verbindungselementendabschnitt 59, 61 mit dem zweiten Beutelabschnitt 25 verbunden ist, z.B. mit einem (jeweiligen) ersten Verbindungselementendabschnitt 59, 61 mit dem zweiten Beutelendabschnitt verbunden ist, und z.B. mit einem (jeweiligen) zweiten Verbindungselementendabschnitt 63, 65 schwenkbar mit dem zweiten Hebelendabschnitt 51 verbunden ist. Die Distanz d, um welche sich der erste Beutelabschnitt 23 ausgehend von dem Halterahmen 9 weiter weg erstreckt als der zweite Beutelabschnitt 25, ist im Wesentlichen gleich dem Abstand zwischen dem jeweiligen ersten Verbindungselementendabschnitt 59 bzw. 61 und dem zweiten Verbindungselementendabschnitt 63 bzw. 65 des jeweiligen Verbindungselements 55 bzw. 57. D.h., die Distanz d ist z.B. im Wesentlichen gleich der Länge des jeweiligen Verbindungselements 55, 57. Damit gleicht das Verbindungselement 55, 57 den durch die Distanz d sich ergebenden Längenunterschied der Längen des ersten und des zweiten Beutelabschnitts 23, 25 aus, sodass sich der jeweilige Schwenkhebel 41, 43 in seiner Hebelentladestellung bzw. in der Entladestellung (des Gelenkmechanismus 35) (siehe Figur 1), bei der der erste und der zweite Beutelabschnitt 23, 25 nach unten hin voll ausgestreckt sind und sich das Verbindungselement 55, 57 mit seiner Länge entsprechend nach unten hin erstreckt, im Wesentlichen horizontal erstreckt.

Gemäß der dargestellten Ausführungsform ist der (bzw. ein) Riegelmechanismus 39 an dem jeweiligen bzw. an dem ersten und dem zweiten Schwenkhebel 41, 43 vorgesehen, wobei der jeweilige Schwenkhebel 41, 43 mittels des jeweiligen Riegelmechanismus 39 in der Beladeschwenkstellung an dem zweiten Beutelendabschnitt lösbar verriegelbar ist, um die Auslassöffnung 37 in der Beladestellung (des Gelenkmechanismus) verriegelt geschlossen zu halten.

Der jeweilige Riegelmechanismus 39 weist einen am jeweiligen ersten Hebelendabschnitt 45, 47 angeordneten, bewegbaren Sperrriegel 67, 69 auf, welcher z.B. mit einem seitlich vorragenden Entriegelungsvorsprung 71, 73 versehen ist, an welchem ein Entriegelungsmitnehmer 75, 77, z.B. in Form einer Entriegelungs-Kulisse, entlang welcher der Entriegelungsvorsprung 71, 73 beim Transport geführt betätigt bzw. bewegt wird, zum Bewirken einer Entriegelungsbewegung des Sperrriegels 67, 69 angreifen kann.

Der jeweilige Sperrriegel 67, 69 ist z.B. mittels eines elastischen Elements 79, 81, wie z.B. einer Druckfeder, zu einer Verriegelungsposition hin vorgespannt. An der Verbindungsstelle bzw. Verbindungsposition zwischen dem ersten Verbindungselementendabschnitt 59, 61 und dem zweiten Beutelendabschnitt 33 des zweiten Beutelabschnitts 25 ist ein seitlich nach außen vorragendes Verriegelungsstück bzw. ein seitlich nach außen vorragender Sperrvorsprung 83, 85, z.B. in Form eines Stifts/Zapfens ausgebildet, gegen welchen der jeweils zugehörige Sperrriegel 67, 69 stößt, wenn der jeweils zugehörige Schwenkhebel 41, 43 in seine Hebelbeladeschwenkstellung gebracht wird, und von welchem der jeweilige Sperrriegel 67, 69 entgegen der Elastikkraft des jeweiligen elastischen Elements 79, 81 in seine Entriegelungsstellung bewegt wird, um dann, nachdem der jeweilige Sperrriegel 67, 69 am Verriegelungsstück vorbeibewegt ist, von der Elastikkraft des jeweiligen elastischen Elements 79, 81 wieder in seine Verriegelungsstellung zurück bewegt zu werden, wobei der jeweilige Sperrriegel 67, 69 dann den jeweiligen Sperrvorsprung 83, 85, hintergreift und den jeweiligen Schwenkhebel 41, 43 in dessen Beladeschwenkstellung bzw. in der Beladestellung (des Gelenkmechanismus) verriegelt hält. In der Beladeschwenkstellung bzw. in der Beladestellung (des Gelenkmechanismus) erstreckt sich z.B. der jeweilige, langgestreckte Schwenkhebel 41, 43 im Wesentlichen vertikal von unten nach oben, und der zweite Beutelendabschnitt 31 des ersten Beutelabschnitts 23 und/oder der durch die Distanz d definierte Distanzabschnitt des oder am zweiten Beutelendabschnitt 31 des ersten Beutelabschnitts 23 bildet einen Beutelboden 87, auf welchem die Objekte 3 aufliegen können/aufliegen.

Wenn damit der erste und der zweite Schwenkhebel 41, 43 in deren Beladeschwenkstellung sind und damit der (jeweilige) Gelenkmechanismus 35 in seiner Beladestellung ist, dann ist der jeweilige seitliche Sperrvorsprung am zweiten Beutelendabschnitt 33 des zweiten Beutelabschnitts im Eingriff mit dem jeweiligen Sperrriegel 67, 69, um die Auslassöffnung 37 in der Beladestellung (des Gelenkmechanismus) verriegelt geschlossen zu halten.

Der erste und der zweite Schwenkhebel 41, 43 sind z.B. drehfest miteinander verbunden, wobei z.B. der erste und der zweite Schwenkhebel 41, 43 über einen Verbindungsschaft 89 miteinander verbunden sind, welcher sich quer zur Transportrichtung T bzw. quer zur Transportbahn 5 von dem ersten zum zweiten Schwenkhebel 41, 43 erstreckt. Der Verbindungsschaft 89 ist z.B. ein Profilschaft mit einem von einer Kreisform unterschiedlichen Querschnittprofil, z.B. einem Mehrkantprofil, z.B. einem Sechskantprofil, wobei der Verbindungsschaft z.B. in eine jeweilige im jeweiligen Schwenkhebel 41, 43 ausgebildete Öffnung eingreift, die z.B. ein dem Querschnittprofil des Verbindungsschafts 89 entsprechendes Profil hat, so dass der Verbindungsschaft 89 darin formschlüssig eingreifen kann.

Der Verbindungsschaft 89 ist z.B. am jeweiligen ersten Hebelendabschnitt 45, 47 des jeweiligen Schwenkhebels 41, 43 angebracht, z.B. drehfest angebracht und definiert z.B. die Schwenkachse, um welche sich der jeweilige Schwenkhebel 41, 43 relativ zum ersten Beutelabschnitt 23 schwenken kann. Der Verbindungsschaft 89 erstreckt sich z.B. durch einen vom ersten Beutelabschnitt 23 bzw. von dessen zweitem Beutelendabschnitt 31 gebildeten Aufnahmetunnel 91 (siehe Fig. 9), wobei der Verbindungsschaft 89 z.B. im Aufnahmetunnel 91 lose aufgenommen ist, sodass er sich darin um seine Längsachse drehen kann, um die Relativdrehung zwischen den Schwenkhebeln 41, 43 und dem ersten Beutelabschnitt 23 bzw. dessen zweiten Beutelendabschnitt 31 zu ermöglichen. Der Aufnahmetunnel 91 wird z.B. dadurch erreicht, dass der zweite Beutelendabschnitt 31 umgefaltet und zurückgefaltet bzw. zurückgeschlagen ist und am vorausgehenden Abschnitt des ersten Beutelabschnitts 23 befestigt ist, z.B. mittels Nähens und/oder Nietens und/oder Klebens.

Zwischen den beiden ersten Verbindungselementendabschnitten 59 der beiden Verbindungselemente 55, 57 kann sich ein Verbindungsschaft/Halteschaft 93 erstrecken, über welchen die beiden Verbindungselemente miteinander verbunden sind, z.B. drehfest miteinander verbunden sind. Der Halteschaft 93 kann wie der Verbindungsschaft 89 strukturiert sein, und die Verbindung zwischen dem Halteschaft 93 und den Verbindungselementen 55, 57 kann wie die Verbindung zwischen dem Verbindungsschaft 89 und den Schwenkhebeln 41, 43 gestaltet sein.

Der Halteschaft 93 definiert z.B. die Schwenkachse, um welche sich der jeweilige Schwenkhebel 41, 43 relativ zum zweiten Beutelabschnitt 25 schwenken kann. Der Halteschaft 93 erstreckt sich z.B. durch einen vom zweiten Beutelabschnitt 25 gebildeten Aufnahmetunnel 95 (siehe Fig. 9), wobei der Halteschaft 93 z.B. im Aufnahmetunnel 95 lose aufgenommen ist, sodass er sich darin um seine Längsachse drehen kann, um eine Relativdrehung zwischen den Verbindungselementen 55, 57 und dem zweiten Beutelabschnitt 25 bzw. dessen zweiten Beutelendabschnitt 33 zu ermöglichen. Der Aufnahmetunnel 95 wird z.B. dadurch erreicht, dass der zweite Beutelendabschnitt 33 umgefaltet und zurückgefaltet bzw. zurückgeschlagen ist und am vorausgehenden Abschnitt des zweiten Beutelabschnitts 35 befestigt ist, z.B. mittels Nähens und/oder Nietens und/oder Klebens.

Der jeweilige zweite Hebelendabschnitt 51, 53 des jeweiligen Schwenkhebels 41, 43 ist z.B. über ein jeweiliges Schwenkgelenk, z.B. in Form eines Schwenkzapfens, 97, 99, gelenkig mit dem jeweiligen zweiten Verbindungselementendabschnitt 63, 65 des jeweiligen Verbindungselements 55, 57 verbunden. Die jeweiligen Schwenkgelenke 97, 99 definieren die/eine (gemeinsame) Schwenkachse, bezüglich welcher der Gelenkmechanismus 35 schwenkt bzw. um welche der jeweilige Schwenkhebel 41, 43 zum Schließen der Auslassöffnung 37 schwenkt. Diese Schwenkachse verläuft z.B. quer zur Transportbahn 5 bzw. zur Transportrichtung T.

Die Schwenkachsen/Drehachsen zwischen den Schwenkhebeln 41, 43 und dem ersten Beutelabschnitt 23 und zwischen den Schwenkhebeln 41, 43 und dem zweiten Beutelabschnitt 25 (bzw. in dieser Ausführungsform zwischen den Schwenkhebeln 41, 43 und den Verbindungselementen 55, 57 und zwischen den Verbindungselementen 55, 57 und dem zweiten Beutelabschnitt 25 (bzw. dessen zweitem Beutelendabschnitt 33)) verlaufen quer zur Transportbahn 5 bzw. zur Transportrichtung T.

Wie aus Figur 9 ersichtlich ist, erstreckt sich/verläuft der jeweilige Schwenkhebel 41, 43 in der Beladestellung des Gelenkmechanismus 35 bzw. in seiner Beladeschwenkstellung im Wesentlichen vertikal und/oder, wie in Figur 1 ersichtlich ist, erstreckt sich/verläuft der jeweilige Schwenkhebel 41, 43 in der Entladestellung des Gelenkmechanismus 35 bzw. in seiner Entladeschwenkstellung im Wesentlichen horizontal. Wie aus Figuren 1 und 9 ersichtlich ist, erstreckt sich/verläuft das jeweilige Verbindungselement 55, 57 in der Entladestellung des Gelenkmechanismus 35 und in der Beladestellung des Gelenkmechanismus 35 im Wesentlichen vertikal.

Wie aus Figuren 9 und 10 ersichtlich ist, ist der Gelenkmechanismus 35 in seiner Beladestellung bzw. ist der jeweilige Schwenkhebel 41, 43 in seiner Beladehebelstellung, wenn die Tragetasche 7 in einer/ihrer Tragetasche-Beladestellung ist, in welcher Objekte 3 in die Tragetasche 7 bzw. in deren Tragebeutel 11 einbringbar sind, und auch wenn die Tragetasche 7 in einer/ihrer Tragetasche-Transportstellung ist, in welcher die Tragetasche in mit Objekten 3 beladenem Zustand oder in entladenem Zustand außerhalb ihrer Tragetasche-Beladestellung und z.B. außerhalb ihrer Tragetasche-Entladestellung von der Hängefördervorrichtung 1 transportiert wird.

Wenn die Tragetasche 7 in ihrer Beladestellung ist, was z.B. an einer Beladestation 101 (siehe Figur 9) der Hängefördervorrichtung 1 der Fall sein kann, dann ist der Halterahmen 9 in einer Halterahmen-Beladestellung, welche einer Tragetasche-Beladestellung zugeordnet ist, (in Figur 9 dargestellt), in welcher z.B. eine von dem Halterahmen 9 definierte Halterahmenöffnung 103 im Wesentlichen horizontal verläuft/ausgerichtet ist/sich erstreckt, wobei dann der erste Beutelendabschnitt 27 des ersten Beutelabschnitts 23 und der zweite Beutelabschnitt 25 in einem Abstand voneinander angeordnet sind, sodass Objekte 3 einfach von oben her durch die Halterahmenöffnung 103 hindurch und/oder auch einfach von der Seite her/seitlich (unterhalb der Halterahmenöffnung 103) zwischen den ersten und den zweiten Beutelabschnitt 23, 25 hinein in die Tragetasche 7 bzw. in deren Taschenbeutel 11 einbringbar sind. Wenn die Tragetasche 7 in ihrer Transportstellung ist, dann ist der Halterahmen 9 in einer Halterahmen-Transportstellung, welcher der Tragetasche-Transportstellung zugeordnet ist, (siehe Figur 10), in welcher z.B. die Halterahmenöffnung 103 im Wesentlichen vertikal verläuft/ausgerichtet ist/sich erstreckt, wobei dann der erste Beutelendabschnitt 27 des ersten Beutelabschnitts 23 und der zweiten Beutelabschnitt 25 zueinander benachbart angeordnet sind, sodass das Innere der Tragetasche 7 bzw. deren Taschenbeutels 11 von oben her nicht mehr frei zugänglich ist bzw. die Halterahmenöffnung 9 von dem zweiten Beutelabschnitt 25 abgedeckt bzw. verschlossen ist und sodass das Innere der Tragetasche 7 auch seitlich schwieriger zugänglich ist.

Um ein unbeabsichtigtes, seitliches Herausfallen von Objekten 3 aus der Tragetasche 7 zu verhindern bzw. zu erschweren, kann z.B. der erste Beutelabschnitt 23, z.B. an seinem zweiten Beutelendabschnitt 31, z.B. benachbart zu seinem zweiten Beutelendabschnitt 31 und/oder z.B. an seinem Beutelboden 78, beidseitig seitlich bzw. beidseitig an seinen Seiträndern mit einer Seitenwand 100 als seitlichem Herausfallschutz, z.B. in Form einer flexiblen, z.B. elastisch flexiblen, Seitenwand 100 ausgebildet sein. Wie in Fig. 1 in Punkt-Strich-Linie dargestellt (vgl. Bezugszeichen 11' und 31') kann in der Entladestellung der Tragetasche 7 bzw. in der Entladeschwenkstellung der Schwenkhebel 41, 43 der dem jeweiligen Schwenkhebel 41, 43 benachbarte Abschnitt des ersten Beutelabschnitts 11, 11' bzw. der zweite Beutelendabschnitt 31, 31' des ersten Beutelabschnitt 11, 11' von der an den Seitenrändern des Beuteabschnitts 11, 11' jeweilig angebrachten Seitenwand 100 etwas ausgebeult sein. In der Beladestellung und in der Transportstellung der Tasche 7 bzw. in der Beladeschwenkestellung der Schwenkhebel 41, 43 wird von den beiden Seitenwänden 100 und dem Beutelboden 87 ein Aufnahmewanne gebildet, in welcher die Objekte 3 sicherer liegen können.

Die Beladestation 101 kann eine Schwenk-Führungskulisse 103 aufweisen, welche an seinen seitlichen (bezüglich der Transportrichtung T bzw. bezüglich der Transportbahn 5) Rändern des Halterahmens 9 angreift, um ihn um den vorlaufenden Rahmenschenkel 15 in seine Halterahmen-Beladestellung zu schwenken und in dieser zu halten. Nach dem Durchlaufen der Beladestation kommt der Halterahmen 9 außer Eingriff von der Schwenk-Führungskulisse 103 und wird via Schwerkraft nach unten in seine Halterahmen-Transportstellung (zurück)geschwenkt, indem z.B. auch der nachlaufende, erste Beutelabschitt 23 am nachlaufenden Rahmenschenkel 17 via Schwerkraft nach unten zieht.

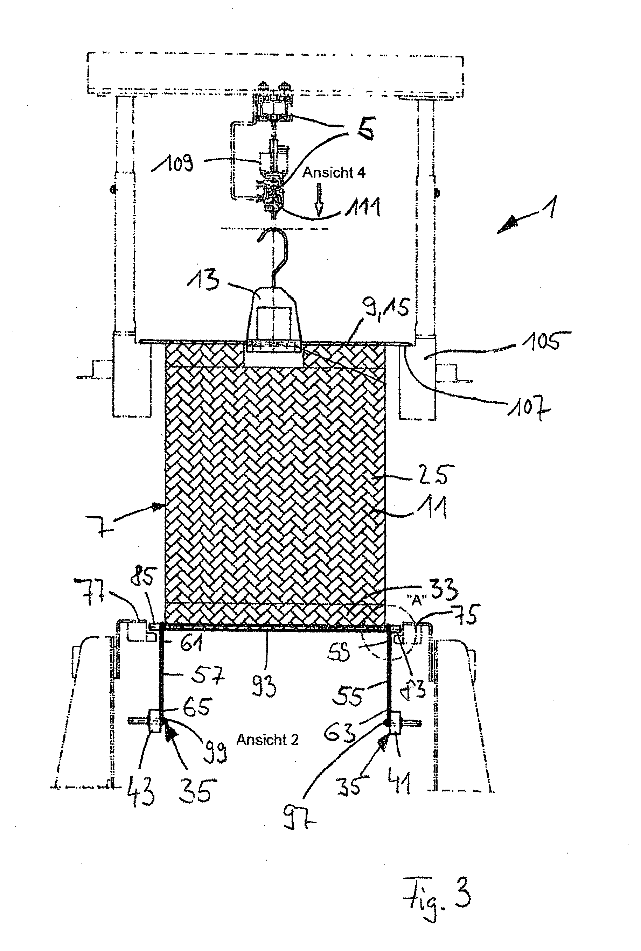

In einer Entladestation 105 der Hängefördervorrichtung 1, zu welcher Entladestation 105 auch z.B. der jeweilige Verriegelungsmitnehmer 75, 77 gehört/zählt, kann z.B. ebenfalls eine Schwenk-Führungskulisse 107 vorgesehen sein, von welcher der Halterahmen 9 in eine Halterahmen-Entladestellung (siehe Figuren 1 und 3) geschwenkt wird, welche der Tragetaschen-Entladestellung zugeordnet ist und welche der wie oben erläuterten Halterahmen-Beladestellung entsprechen kann.

Die Hängefördervorrichtung 1 weist ferner z.B. eine Mehrzahl von Mitnehmern 109 auf (nur einer ist in der Zeichnung dargestellt), welche entlang der Führungsbahn 5 geführt bewegbar sind und automatisch angetrieben sind und von welchen die Tragetaschen 7 in Transportrichtung T (automatisch) mitnehmbar sind. Die Tragetaschen 7 sind z.B. mit ihren Anhängeelementen 13 in Laufkatzen (z.B. auch Trolleys genannt) 111 eingehängt, welche ihrerseits entlang der Führungsbahn 5 geführt bewegbar sind und an welchen die Mitnehmer 109 angreifen können, um damit die Laufkatzen 111 und mittels diesen die Tragetaschen 7 mitzunehmen.

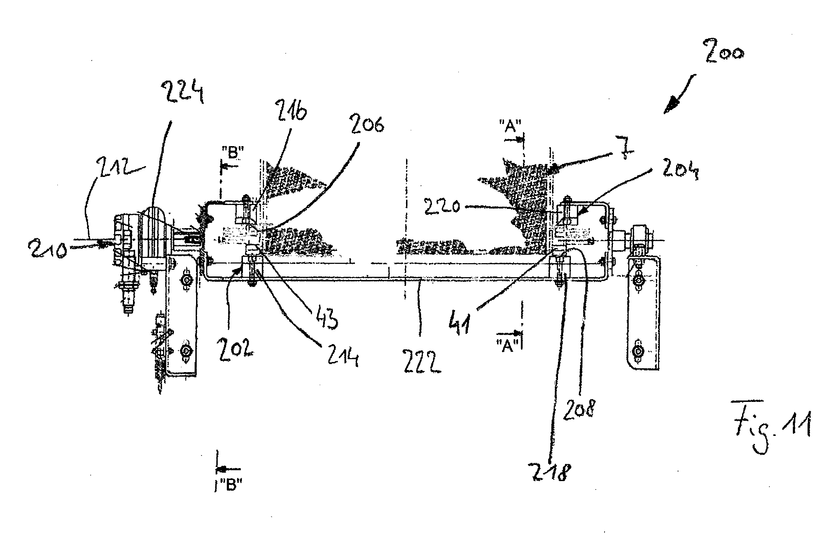

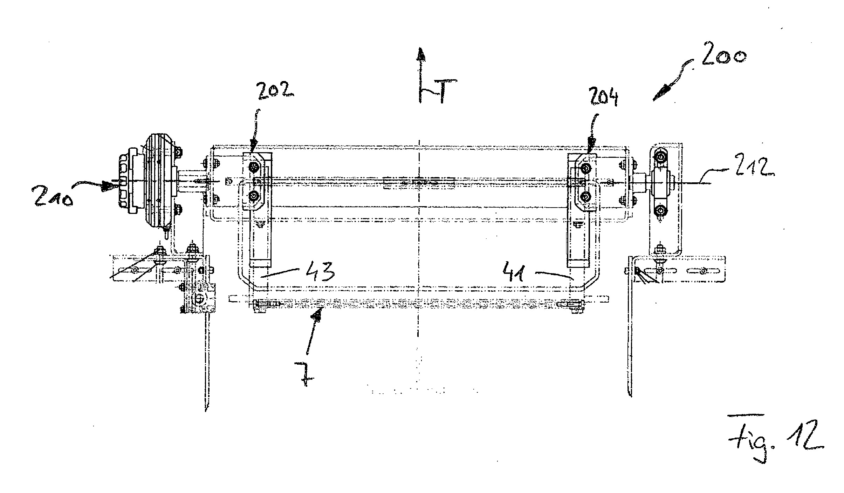

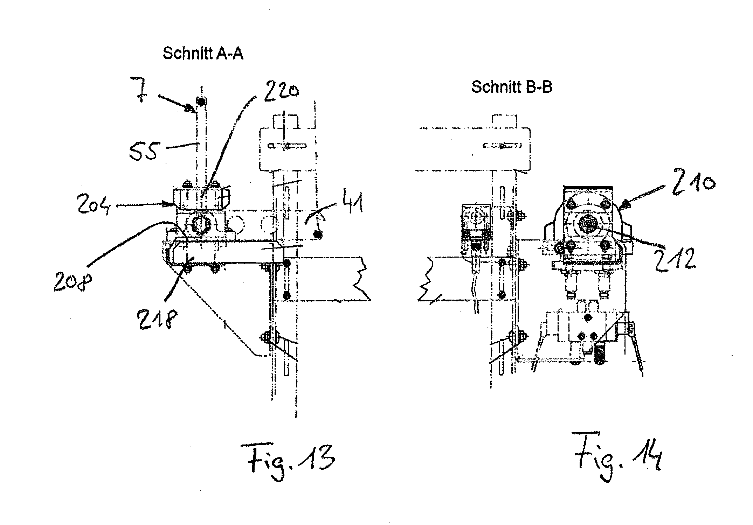

Die Figuren 11 bis 16 zeigen einen Schließmechanismus 200 (der Hängefördervorrichtung 1) zum Schließen einer/der wie hierin beschriebenen Tragetasche 7 gemäß einer Ausführungsform der Erfindung, aufweisend eine erste Backe 202 und eine zweite Backe 204, die (in Richtung quer zur Transportrichtung T bzw. zur Transportbahn 5) einander gegenüberliegend angeordnet sind und die jeweils einen Aufnahmekanal 206, 208 aufweisen, in welchen der erste und der zweite Schwenkhebel 41, 43 beim Transportieren der Tragetasche 7 (in Transportrichtung T) einfahren können bzw. einfahren, und eine Dreheinrichtung 210, von welcher die erste Backe 202 und die zweite Backe 204 synchron um eine gemeinsame Drehachse 212 miteinander drehbar sind, um die in den Aufnahmekanälen 206, 208 aufgenommenen, z.B. gleitend aufgenommenen, Schwenkhebel 41, 43 in die Hebelbeladestellung bzw. in die Beladeschwenkstellung (des Gelenkmechanismus 35) zu schwenken.

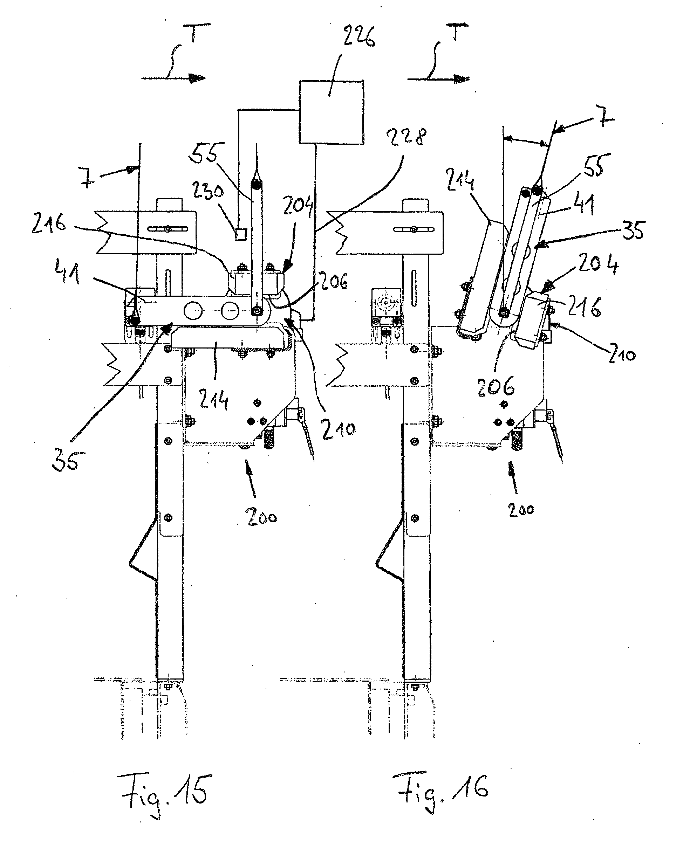

Die Dreheinrichtung 210 ist z.B. derart ausgebildet, dass die erste und die zweite Backe 202, 204 beim Schwenken des jeweiligen Schwenkhebels 41, 43 ausgehend von einer Backe-Aufnahmestellung eine Schwenkbewegung von über 90°, optional über 100°, optional über 100° und kleiner gleich 115° in eine Backe-Abgabestellung durchführen, sodass z.B. der jeweilige Schwenkhebel 41, 43 von seiner horizontalen Hebelentaldestellung (in Figur 15 dargestellt) im Rahmen der Schwenkbewegung durch die Dreheinrichtung 210 zunächst um 90° in seine vertikale Hebelbeladestellung geschwenkt wird, in welcher der Gelenkmechanismus in seiner Verriegelungsstellung ist bzw. verriegelt ist, wobei der jeweilige Schwenkhebel 41, 43 dann zusammen mit dem jeweiligen Verbindungselement 55, 57, das in der Verriegelungsstellung des Gelenkmechanismus mit/an dem zugehörigen Schwenkhebel 41, 43 verriegelt ist (mittels des oben beschriebenen Riegelmechanismus 39), in eine Schließvorgang-Endschwenkstellung geschwenkt ist (siehe Figur 16), in welcher der jeweilige Schwenkhebel 41, 43 mit dem daran verriegelten Verbindungselement 55, 57 um einen Winkel α von ca. 10-25° und/oder z.B. 10-20° und/oder z.B. etwa 15° +/-2° über 90° hinaus weitergeschwenkt wird. Der jeweilige Schwenkhebel 41, 43 und das daran verriegelte Verbindungselement 55, 57 erstrecken sich in der Verriegelungsstellung (des Gelenkmechanismus 35) mit ihren Längsrichtungen im Wesentlichen parallel, wobei sie sich in der Schließvorgang-Endschwenkstellung, z.B. um den oben genannten Winkel α, bezüglich der Vertikalen leicht schräg in Transportrichtung T erstrecken, sodass beim Weitertransportieren der Tragetasche 7 die im jeweiligen Aufnahmekanal 204, 206 aufgenommenen Schwenkhebel 41, 43 leichter aus den Aufnahmekanälen 204, 206 gelangen können, z.B. daraus heraus gleiten können.

In der Backe-Aufnahmestellung (in Figur 15 dargestellt) erstreckt sich der jeweilige Aufnahmekanal 206, 208 mit einer/seiner Kanallängsrichtung im Wesentlichen horizontal, wobei die Aufnahmekanal-Längsenden offen sind, sodass der jeweilige sich in seiner Entladehebelschwenkstellung befindende Schwenkhebel 41, 43 längs in den jeweils zugehörigen Aufnahmekanal 206, 208 im Rahmen des Transports der Tragetasche 7 entlang der Transportrichtung T einfahren kann. D.h., die Aufnahmekanäle 206, 208 sind zu der Vertikalposition der sich ihrer Entladehebelschwenkstellung befindenden Schwenkhebel 41, 43 ausgerichtet.

Die jeweilige Backe 202, 204 hat z.B. ein erstes und ein zweites Backenteil 214, 216 bzw. 218, 220, welche um die Kanalweite (quer zur Kanallängsrichtung) im Abstand voneinander angeordnet sind und die seitlichen Begrenzungen des jeweiligen Aufnahmekanals 206 bzw. 208 bilden. Das jeweilige erste Backenteil 214 bzw. 218 befindet sich in der Backe-Aufnahmestellung, in welcher die Schwenkhebel 41, 43 in die Aufnahmekanäle 306, 208 längs einfahrbar sind, vertikal unter dem jeweiligen zweiten Backenteil 216 bzw. 220. Das jeweilige erste Backenteil 214 bzw. 218 ist entlang der Kanallängsrichtung länger, z.B. wenigstens doppelt so lang, wie das jeweilige zweite Backenteil 216 bzw. 220.

Das jeweilige erste 214, 216 und das jeweilige zweite 218, 220 Backenteil sind jeweilig drehfest oder insgesamt starr miteinander verbunden. Die erste und die zweite Backe 202, 204 sind z.B. über eine Verbindungsstruktur 222 drehfest und/oder insgesamt starr miteinander verbunden. Die Dreheinrichtung 210 kann einen mit den Backen 202, 204 drehfest gekuppelten Drehmotor 224 aufweisen, der z.B. elektrisch oder pneumatisch angetrieben ist, und von dem die Backen 202, 204 gesteuert drehend antreibbar sind, um die oben beschriebene Dreh- bzw. Schwenkbewegung durchzuführen.

Der Schließmechanismus 200 kann mit einer Steuervorrichtung 226 gekoppelt bzw. verbunden bzw. versehen sein, welche über eine Signalleitung 228 mit der Dreheinrichtung 210 verbunden ist, z.B. mit deren Drehmotor 224 verbunden ist, um die Drehung der Dreheinrichtung 210 zu steuern. Der Schließmechanismus 200 kann z.B. einen Sensor 230 aufweisen, welcher mit der Steuervorrichtung 226 verbunden ist und von welchem z.B. erfassbar ist, ob bzw. wann das erste und/oder das zweite Verbindungselement 55, 57 auf Höhe (entlang dem Aufnahmekanal 206, 208) der Drehachse 212 der Dreheinrichtung 210 ist, worauf der Sensor 230 ein entsprechendes Signal an die Steuervorrichtung 226 gibt, welche daraufhin z.B. den Drehvorgang zum Schwenken der Schwenkhebel 41, 43 in deren Hebelbeladeschwenkstellung auslöst. Der Sensor 230 kann z.B. zusätzlich oder alternativ erfassen, ob bzw. wann sich das Schwenkgelenk 97, 99 zwischen dem ersten Verbindungselementendabschnitt 63, 65 des ersten und/oder des zweiten Verbindungselements 55, 57 und dem zweiten Hebelendabschnitt 51, 53 des ersten und/oder des zweiten Schwenkhebels 41, 43 auf Höhe (entlang dem Aufnahmekanal 206, 208) der Drehachse 212 der Dreheinrichtung 210 ist, um den Drehvorgang auszulösen. Der Sensor 230 kann damit allgemein eine vorbestimmte Relativposition zwischen dem Gelenkmechanismus 35 und der Dreheinrichtung 35 erfassen, z.B. die Position, in der die Schwenkachse des Gelenkmechanismus koaxial ist zur Drehachse 212 der Dreheinrichrung 210, bei welcher Relativposition die Steuerrichtung 226 die Drehbewegung/Drehung der Backen 202, 204 auslöst, um die Schwenkhebel 41, 43 in deren Hebelbeladeschwenkstellung zu schwenken.

Gemäß der vorausgehend beschriebenen Ausführungsformen ist damit ferner eine Hängefördervorrichtung 1 für den hängenden Transport von Objekten 3 in Tragetaschen 7 bereitgestellt, mit der Transportbahn 5, den mehreren Tragetaschen 7, die an der Transportbahn 5 angehängt sind, z.B. mittels der Laufkatzen 111, und einer Mitnehmereinrichtung mit z.B. den Mitnehmern 109, die an den Aufhängeelementen 13 der Tragetaschen 7 angreifen können, z.B. direkt oder indirekt über z.B. direktes angreifen an den Laufkatzen 111, um die Tragetaschen 7 entlang der Transportbahn 5 mitzunehmen.

## Patentansprüche

1. Tragetasche (7) für eine Hängefördervorrichtung (1) für den hängenden Transport von Objekten (3), aufweisend
einen Halterahmen (9), einen Taschenbeutel (11), der am Halterahmen (9) hängt und von dem zu transportierende Objekte (3) aufnehmbar sind, und ein Aufhängeelement (13), welches mit dem Halterahmen (9) verbunden ist und mittels dessen die Tragetasche (7) an die Hängefördervorrichtung (1) anhängbar ist, um von der Hängefördervorrichtung (1) hängend transportiert zu werden,
**dadurch gekennzeichnet, dass**
der Taschenbeutel (11) einen ersten und einen zweiten Beutelabschnitt (23, 25) aufweist, die jeweils einen mit dem Halterahmen (9) verbundenen, ersten Beutelendabschnitt (27,29) und einen vom Halterahmen (9) abgewandten, zweiten Beutelendabschnitt (31, 33) aufweisen, wobei die zweiten Beutelendabschnitte (31, 33) über einen Gelenkmechanismus (35) miteinander verbunden sind, welcher in eine Entladestellung bringbar ist, in welcher die zweiten Beutelendabschnitte (31, 33) in einem Abstand voneinander angeordnet sind, sodass der Taschenbeutel (11) zur Abgabe von Objekten (3) mit einer zwischen den zweiten Beutelendabschnitten (31, 33) gebildeten Auslassöffnung (37) versehen ist, und welcher in eine Beladestellung bringbar ist, in welcher die zweiten Beutelendabschnitte (31, 33) zueinander benachbart angeordnet sind, sodass die Auslassöffnung (37) geschlossen ist und der Taschenbeutel (11) Objekte (3) aufnehmen kann.

2. Tragetasche (7) gemäß Anspruch 1, wobei der Gelenkmechanismus (35) einen Riegelmechanismus (39) aufweist, von welchem der Gelenkmechanismus (35) in der Beladestellung lösbar verriegelbar ist, um die Auslassöffnung (37) in der Beladestellung verriegelt geschlossen zu halten.

3. Tragetasche (7) gemäß Anspruch 1 oder 2, wobei der Gelenkmechanismus (35) einen Schwenkhebel (41, 43) mit einem ersten Hebelendabschnitt (45, 47), der mit dem zweiten Beutelendabschnitt (31) des ersten Beutelabschnitts (23) verbunden ist, und einem zweiten Hebelendabschnitt (51, 53), der mit dem zweiten Beutelendabschnitt (33) des zweiten Beutelabschnitts (25) schwenkbar verbunden ist, aufweist, wobei der Schwenkhebel (41, 43) zwischen einer der Entladestellung zugeordneten Entladeschwenkstellung und einer der Beladestellung zugeordneten Beladeschwenkstellung hin und her schwenkbar ist, und/oder wobei der Gelenkmechanismus (35) einen ersten und einen zweiten Schwenkhebel (41, 43) aufweist, die auf einander gegenüberliegenden seitlichen Seiten des Taschenbeutels (7) angeordnet sind und jeweils einen ersten Hebelendabschnitt (45, 47) aufweisen, der mit dem zweiten Beutelendabschnitt (31) des ersten Beutelabschnitts (23) verbunden ist, und einem zweiten Hebelendabschnitt (51, 53), der mit dem zweiten Beutelendabschnitt (33) des zweiten Beutelabschnitts (35) schwenkbar verbunden ist, wobei der erste und der zweite Schwenkhebel (41, 43) zwischen einer der Entladestellung zugeordneten Entladeschwenkstellung und einer der Beladestellung zugeordneten Beladeschwenkstellung hin und her schwenkbar sind.

4. Tragetasche (7) gemäß Anspruch 3, wobei der jeweilige Schwenkhebel (41, 43) in der Beladeschwenkstellung an dem zweiten Beutelendabschnitt (33) des zweiten Beutelabschnitts (25) über einen jeweiligen Riegelmechanismus (39) lösbar verriegelbar ist, um die Auslassöffnung (35) in der Beladestellung verriegelt geschlossen zu halten.

5. Tragetasche (7) gemäß Anspruch 4, wobei der jeweilige Riegelmechanismus (39) einen am ersten Hebelendabschnitt (45, 47) angeordneten, bewegbaren Sperrriegel (67, 69) aufweist, welcher optional mit einem seitlich vorragenden Entriegelungsvorsprung (71) versehen ist, an welchem ein Entriegelungsmitnehmer (75) zum Bewirken einer Entriegelungsbewegung des Sperrriegels (67, 69) angreifen kann.

6. Tragetasche (7) gemäß Anspruch 5, wobei an dem zweiten Beutelendabschnitt (33) des zweiten Beutelabschnitts (25) ein jeweiliger seitlicher Sperrvorsprung (83, 85) ausgebildet ist, mit welchem der jeweilige Sperrriegel (67, 69) in der Beladestellung im Eingriff ist, um die Auslassöffnung (37) in der Beladestellung verriegelt geschlossen zu halten.

7. Tragetasche (7) gemäß einem der Ansprüche 3 bis 6, wobei der jeweilige Schwenkhebel (41, 43) mit seinem zweiten Hebelendabschnitt (51, 53) über ein Verbindungselement (55, 57) mit dem zweiten Beutelabschnitt (25) verbunden ist, wobei das Verbindungselement (55, 57) mit einem ersten Verbindungselementendabschnitt (59, 61) mit dem zweiten Beutelendabschnitt (33) des zweiten Beutelabschnitts (25) verbunden ist, und mit einem zweiten Verbindungselementendabschnitt (63, 65) schwenkbar mit dem zweiten Hebelendabschnitt (51, 55) verbunden ist.

8. Tragetasche (7) gemäß einem der Ansprüche 3 bis 7, insofern bezogen auf Anspruch 3, 2-te Alternative, wobei der erste und der zweite Schwenkhebel (41, 43) drehfest miteinander verbunden sind, wobei optional der erste und der zweite Schwenkhebel (41, 43) über einen Verbindungsschaft (89), welcher sich durch einen vom ersten Beutelabschnitt (23) gebildeten Aufnahmetunnel (91) erstreckt und welcher die Drehachse zwischen dem ersten Beutelabschnitt (23) und dem ersten und dem zweiten Schwenkhebel (41, 43) definiert, drehfest miteinander verbunden sind.

9. Tragetasche (7) gemäß einem der Ansprüche 3 bis 8, wobei der jeweilige Schwenkhebel (41, 43) in der Beladestellung im Wesentlichen vertikal und/oder in der Entladestellung im Wesentlichen horizontal verläuft und/oder wobei, insofern bezogen auf Anspruch 7, das jeweilige Verbindungselement (55, 57) in der Entladestellung und in der Beladestellung im Wesentlichen vertikal verläuft.

10. Tragetasche (7) gemäß einem der Ansprüche 1 bis 9, wobei sich der erste Beutelabschnitt (23) ausgehend von dem Halterahmen (9) um eine Distanz (d) weiter weg erstreckt als der zweite Beutelabschnitt (25), wobei optional, insofern auf Anspruch 7 bezogen, die Distanz (d), um welche sich der erste Beutelabschnitt (23) ausgehend von dem Halterahmen (9) weiter weg erstreckt als der zweite Beutelabschnitt (23), im Wesentlichen gleich dem Abstand zwischen dem ersten Verbindungselementendabschnitt (59) und dem zweiten Verbindungselementendabschnitt (63) des jeweiligen Verbindungselements (55, 57) ist.

11. Tragetasche (7) gemäß einem der Ansprüche 1 bis 10, wobei der zweite Beutelendabschnitt (31, 31') des ersten Beutelabschnitts (23) an seinen Seitenrändern mit einer jeweiligen Seitenwand (100) versehen ist, wobei in der Beladestellung von dem zweiten Beutelendabschnitt (31, 31') des ersten Beutelabschnitts (23) und den Seitenwänden (100) eine Aufnahmewanne ausgebildet ist.

12. Schließmechanismus (200) zum Schließen einer Tragetasche (7) gemäß einem der vorhergehenden Ansprüche, insofern bezogen auf Anspruch 3, 2-te Alternative, mit einer ersten Backe (202) und einer zweiten Backe (204), die einander gegenüberliegend angeordnet sind und die jeweils einen Aufnahmekanal (206, 208) aufweisen, in welchen der erste und der zweite Schwenkhebel (41, 43) beim Transportieren der Tragetasche (7) einfahren können, um darin aufgenommen zu sein, und einer Dreheinrichtung (210), von welcher die erste Backe (202) und die zweite Backe (204) synchron um eine gemeinsame Drehachse (212) miteinander drehbar sind, um die in den Aufnahmekanälen (206, 208) aufgenommenen Schwenkhebel (41, 43) in die Beladeschwenkstellung zu schwenken.

13. Schließmechanismus (200) gemäß Anspruch 12, wobei die Dreheinrichtung derart ausgebildet ist, dass die erste und die zweite Backe (202, 204) beim Schwenken des jeweiligen Schwenkhebels (41, 43) eine Schwenkbewegung von über 90°, optional über 100°, optional über 100° und kleiner gleich 115° durchführen.

14. Hängefördervorrichtung (1) für den hängenden Transport von Objekten (3) in Tragetaschen (7),
mit einer Transportbahn (5),
einer Mehrzahl von Tragetaschen (7) gemäß einem der Ansprüche 1 bis 11, die an der Transportbahn (5) angehängt sind,
einer Mitnehmereinrichtung mit Mitnehmern (109), die an den Aufhängeelementen (111) der Tragetaschen (7) angreifen können, um die Tragetaschen (7) entlang der Transportbahn (5) mitzunehmen, und
optional einem Schließmechanismus gemäß Anspruch 12 oder 13.

15. Hängefördervorrichtung (1) gemäß Anspruch 14, wobei die Tragetasche (7) gemäß Anspruch 5 ausgebildet ist, wobei der jeweilige Sperrriegel (67, 69) mit einem seitlich vorragenden Entriegelungsvorsprung (71, 73) versehen ist, wobei die Hängefördervorrichtung (1) ferner eine Entriegelungsvorrichtung mit einem Entriegelungsmitnehmer (75, 77) aufweist, der in Form einer Führungskulisse ausgebildet ist, entlang welcher der jeweilige Entriegelungsvorsprung (71, 73) beim Transport der Tragetasche derart entlang gleiten und/oder rollen kann, dass der jeweilige Sperrriegel (67, 69) eine Entriegelungsbewegung durchführt.

## Claims

1. Carrier bag (7) for a suspended conveyor device (1) for the hanging transport of objects (3), comprising
a holding frame (9), a bag pouch (11) which hangs from the holding frame (9) and by which objects (3) to be transported can be received, and a suspension member (13) which is connected to the holding frame (9) and by means of which the carrier bag (7) can be suspended from the suspended conveyor device (1), so as to be transported by the suspended conveyor device (1) in a suspended way,
**characterized in that**
the bag pouch (11) comprises a first and second pouch portions (23, 25) each comprising a first pouch end portion (27, 29) connected to the holding frame (9) and a second pouch end portion (31, 33) turned away from the holding frame (9), wherein the second pouch end portions (31, 33) are connected to each other by a hinge mechanism (35) which can be brought into an unloading position in which the second pouch end portions (31, 33) are arranged at a distance from each other, so that the bag pouch (11) is provided with an outlet opening (37) formed between the second pouch end portions (31, 33) for emitting objects (3), and which can be brought into a loading position in which the second pouch end portions (31, 33) are arranged adjacent to each other, so that the outlet opening (37) is closed and the bag pouch (11) can receive objects (3).

2. Carrier bag (7) according to claim 1, wherein the hinge mechanism (35) comprises a locking mechanism (39) by which the hinge mechanism (35) can be locked in a releasable way in the loading position, so as to keep the outlet opening (37) closed in a locking way in the loading position.

3. Carrier bag (7) according to claim 1 or 2, wherein the hinge mechanism (35) comprises a pivoted lever (41, 43) having a first lever end portion (45, 47) connected to the second pouch end portion (31) of the first pouch portion (23), and a second lever end portion (51, 53) pivotably connected to the second pouch end portion (33) of the second pouch portion (25), wherein the pivoted lever (41, 43) is pivotable back and forth between an unloading pivot position associated with the unloading position and a loading pivot position associated with the loading position, and/or wherein the hinge mechanism (35) comprises a first and second pivoted levers (41, 43) which are arranged on opposed lateral sides of the bag pouch (7) and each comprise a first lever end portion (45, 47) connected to the second pouch end portion (31) of the first pouch portion (23), and a second lever end portion (51, 53) pivotably connected to the second pouch end portion (33) of the second pouch portion (35), wherein the first and second pivoted levers (41, 43) are pivotable back and forth between an unloading pivot position associated with the unloading position and a loading pivot position associated with the loading position.

4. Carrier bag (7) according to claim 3, wherein the respective pivoted lever (41, 43) can be locked in a releasable way at the second pouch end portion (33) of the second pouch portion (25) in the loading pivot position through a respective locking mechanism (39), so as to keep the outlet opening (35) closed in a locking way in the loading position.

5. Carrier bag (7) according to claim 4, wherein the respective locking mechanism (39) comprises a movable locking bolt (67, 69) arranged on a first lever end portion (45, 47), which is optionally provided with a laterally protruding unlocking protrusion (71) with which an unlocking catch (75) can be engaged for causing an unlocking movement of the locking bolt (67, 69).

6. Carrier bag (7) according to claim 5, wherein a respective lateral locking protrusion (83, 85) is formed on the second pouch end portion (33) of the second pouch portion (25), with which the respective locking bolt (67, 69) is engaged in the loading position, so as to keep the outlet opening (37) closed in a locking way in the loading position.

7. Carrier bag (7) according to any one of claims 3 to 6, wherein the respective pivoted lever (41, 43) is connected with its second lever end portion (51, 53) by a connecting member (55, 57) to the second pouch portion (25), wherein the connecting member (55, 57) is connected with a first connecting member end portion (59, 61) to the second pouch end portion (33) of the second pouch portion (25), and is pivotably connected with a second connecting member end portion (63, 65) to the second lever end portion (51, 55).

8. Carrier bag (7) according to any one of claims 3 to 7, insofar as related to claim 3, 2^{nd} alternative, wherein the first and second pivoted levers (41, 43) are connected to each other in a torque proof manner, wherein optionally the first and second pivoted levers (41, 43) are connected to each other in a torque proof manner through a connecting shaft (89) extending through a receiving tunnel (91) formed by the first pouch portion (23) and which defines the rotational axis between the first pouch portion (23) and the first and second pivoted levers (41, 43).

9. Carrier bag (7) according to any one of claims 3 to 8, wherein the respective pivoted lever (41, 43) extends substantially vertically in the loading position and/or substantially horizontally in the unloading position and/or wherein, insofar as related to claim 7, the respective connecting member (55, 57) extends substantially vertically in the unloading position and in the loading position.

10. Carrier bag (7) according to any one of claims 1 to 9, wherein the first pouch portion (23), starting from the holding frame (9), extends by a distance (d) further away than the second pouch portion (25), wherein optionally, insofar as related to claim 7, the distance (d) by which the second pouch portion (23) extends further away than the second pouch portion (23) starting from the holding frame (9) is substantially equal to the distance between the first connecting member end portion (59) and the second connecting member end portion (63) of the respective connecting member (55, 57).

11. Carrier bag (7) according to any one of claims 1 to 10, wherein the second pouch end portion (31, 31') of the first pouch portion (23) is provided with a respective side wall (100) on its lateral edges, wherein a receiving tub is formed by the second pouch end portion (31, 31') of the first pouch portion (23) and the side walls (100) in the loading position.

12. Closing mechanism (200) for closing a carrier bag (7) according to any one of the preceding claims, insofar as related to claim 3, 2^{nd} alternative, having a first jaw (202) and a second jaw (204) which are arranged opposite each other and which respectively comprise a receiving channel (206, 208) which the first and second pivoted levers (41, 43) can enter when the carrier bag (7) is transported, so as to be received therein, and a rotating device (210) by which the first jaw (202) and the second jaw (204) can be rotated with each other in a synchronous way about a common rotational axis (212), so as to pivot the pivoted levers (41, 43) received in the receiving channels (206, 208) into the loading position.

13. Closing mechanism (200) according to claim 12, wherein the rotating device is configured in such a way that the first and second jaws (202, 204) make a pivoting movement of greater than 90°, optionally of greater than 100° and equal to or less than 115° when the respective pivoted lever (41, 43) is pivoted.

14. Suspended conveyor device (1) for the hanging transport of objects (3) in carrier bags (7),
having a conveyor track (5),
a plurality of carrier bags (7) according to any one of claims 1 to 11, which are suspended from the conveyor track,
a catch device with catches (109) which can be engaged with the suspension members (111) of the carrier bags (7), so as to carry the carrier bags (7) along the conveyor track (5), and
optionally a closing mechanism according to claim 12 or 13.

15. Suspended conveyor device (1) according to claim 14, wherein the carrier bag (7) is formed according to claim 5, wherein the respective locking bolt (67, 69) is provided with a laterally protruding unlocking protrusion (71, 73), wherein the suspended conveyor device (1) further comprises an unlocking device having an unlocking catch (75, 77) which is configured in the form of a guiding link, along which the respective unlocking protrusion (71, 73) can slide and/or roll when the carrier bag is transported in such a way that the respective locking bolt (67, 69) makes an unlocking movement.

## Revendications

1. Poche de transport (7) pour un dispositif de convoyage suspendu (1) pour le transport suspendu d'objets (3), comportant :
un châssis d'entretien (9), un sac-poche (11) qui est suspendu au châssis d'entretien (9) et par lequel des objets (3) à être transportés peuvent être accueillis, et un élément de suspension (13) qui est relié avec le châssis d'entretien (9) et par lequel la poche de transport (7) peut être suspendue au dispositif de convoyage suspendu (1), afin d'être transportée de façon suspendue par le dispositif de convoyage suspendu (1),
**caractérisée en ce que**
le sac-poche (11) comprend une première et une deuxième parties de sac (23, 25) respectivement comportant une première partie d'extrémité de sac (27, 29) reliée avec le châssis d'entretien (9) et une deuxième partie d'extrémité de sac (31, 33) détournée du châssis d'entretien (9), les deuxièmes parties d'extrémité de sac (31, 33) étant reliées l'une avec l'autre par un mécanisme d'articulation (35) qui peut être amené dans une position de décharge, dans laquelle les deuxièmes parties d'extrémité de sac (31, 33) sont disposées à une distance l'une de l'autre, de sorte que le sac-poche (11) est pourvu d'une ouverture de sortie (37) formée entre les deuxièmes parties d'extrémité de sac (31, 33) pour émettre des objets (3), et qui peut être amené dans une position de charge, dans laquelle les deuxièmes parties d'extrémité de sac (31, 33) sont disposées adjacentes l'une à l'autre, de sorte que l'ouverture de sortie (37) est fermée et le sac-poche (11) peut accueillir des objets (3).

2. Poche de transport (7) selon la revendication 1, dans laquelle le mécanisme d'articulation (35) comprend un mécanisme de verrou (39), par lequel le mécanisme d'articulation (35) peut être verrouillé de façon amovible dans la position de charge, afin de retenir fermée l'ouverture de sortie (37) dans la position de charge de façon verrouillée.

3. Poche de transport (7) selon la revendication 1 ou 2, dans laquelle le mécanisme d'articulation (35) comprend un levier pivotant (41, 43) ayant une première partie d'extrémité de levier (45, 47) reliée avec une deuxième partie d'extrémité de sac (31) de la première partie de sac (23), et une deuxième partie d'extrémité de levier (51, 53) reliée de façon pivotante avec la deuxième partie d'extrémité de sac (33) de la deuxième partie de sac (25), dans laquelle le levier pivotant (41, 43) peut être pivoté entre une position pivotante de décharge assignée à la position de décharge et une position pivotante de charge assignée à la position de charge, et/ou dans laquelle le mécanisme d'articulation (35) comprend un premier et un deuxième leviers pivotants (41, 43) agencés sur des côtés latéraux opposés du sac-poche (11) et respectivement comportant une première partie d'extrémité de levier (45, 47) reliée avec la deuxième partie d'extrémité de sac (31) de la première partie de sac (23), et une deuxième partie d'extrémité de levier (51, 53) reliée de façon pivotante avec la deuxième partie d'extrémité de sac (33) de la deuxième partie de sac (35), dans laquelle le premier et le deuxième leviers pivotants (41, 43) peuvent être pivotés entre une position pivotante de décharge assignée à la position de décharge et une position pivotante de charge assignée à la position de charge.

4. Poche de transport (7) selon la revendication 3, dans laquelle le levier pivotant (41, 43) respectif peut être verrouillé de façon amovible à la deuxième partie d'extrémité de sac (33) de la deuxième partie de sac (25) par un mécanisme de verrou (39) respectif dans la position pivotante de charge, afin de retenir fermée l'ouverture de sortie (35) dans la position de charge de façon verrouillée.

5. Poche de transport (7) selon la revendication 4, dans laquelle le mécanisme de verrou (39) respectif comprend un verrou de blocage (67, 69) mobile disposé sur la première partie d'extrémité de levier (45, 47), qui de façon optionnelle est pourvu d'une saillie de déverrouillage (71) faisant saillie de façon latérale, avec laquelle un entraîneur de déverrouillage (75) peut être en prise afin de produire un mouvement de déverrouillage du verrou de blocage (67, 69).

6. Poche de transport (7) selon la revendication 5, dans laquelle une saillie de verrouillage (83, 85) latérale respective est formée sur la deuxième partie d'extrémité de sac (33) de la deuxième partie de sac (25), avec laquelle le verrou de blocage (67, 69) respectif est en prise dans la position de charge, afin de retenir fermée l'ouverture de sortie (37) de façon verrouillée dans la position de charge.

7. Poche de transport (7) selon l'une quelconque des revendications 3 à 6, dans laquelle le levier pivotant (41, 43) respectif est relié avec sa deuxième partie d'extrémité de levier (51, 53) avec la deuxième partie de sac (25) par un élément de connexion (55, 57), dans laquelle l'élément de connexion (55, 57) est relié avec une première partie d'extrémité d'élément de connexion (59, 61) avec la deuxième partie d'extrémité de sac (33) de la deuxième partie de sac (25), et est relié de façon pivotante avec une deuxième partie d'extrémité d'élément de connexion (63, 65) avec la deuxième partie d'extrémité de levier (51, 55).

8. Poche de transport (7) selon l'une quelconque des revendications 3 à 7, pour autant que relatif à la revendication 3, 2^{ème} alternative, dans laquelle le premier et le deuxième leviers pivotants (41, 43) sont reliés l'un avec l'autre de façon résistante à la torsion, le premier et le deuxième leviers pivotants (41, 43) étant optionnellement reliés l'un avec l'autre de façon résistante à la torsion par une tige de liaison (89) qui s'étend au travers d'un tunnel de réception (91) formé par la première partie de sac (23) et qui définit l'axe de rotation entre la première partie de sac (23) et le premier et le deuxième leviers pivotants (41, 43).

9. Poche de transport (7) selon l'une quelconque des revendications 3 à 8, dans laquelle le levier pivotant (41, 43) respectif s'étend essentiellement verticalement dans la position de charge et/ou s'étend essentiellement horizontalement dans la position de décharge et/ou dans laquelle, pour autant que relatif à la revendication 7, l'élément de connexion (55, 57) respectif s'étend essentiellement verticalement dans la position de décharge et dans la position de charge.

10. Poche de transport (7) selon l'une quelconque des revendications 1 à 9, dans laquelle la première partie de sac (23) s'étend, à partir du châssis d'entretien (9), à une distance (d) plus éloignée que la deuxième partie de sac (25), dans laquelle de façon optionnelle, pour autant que relatif à la revendication 7, la distance (d) à laquelle la première partie de sac (23) s'étend à partir du châssis d'entretien (9) plus loin que la deuxième partie de sac (23) est essentiellement égale à la distance entre la première partie d'extrémité d'élément de connexion (59) et la deuxième partie d'extrémité d'élément de connexion (63) de l'élément de connexion (55, 57) respectif.

11. Poche de transport (7) selon l'une quelconque des revendications 1 à 10, dans laquelle la deuxième partie d'extrémité de sac (31, 31') de la première partie de sac (23) est pourvue d'une paroi latérale (100) respective sur ses bords latéraux, dans laquelle un bac de réception est formé dans la position de charge par la deuxième partie d'extrémité de sac (31, 31') de la première partie de sac (23) et les parois latérales (100).

12. Mécanisme de fermeture (200) pour fermer une poche de transport (7) selon l'une quelconque des revendications précédentes, pour autant que respectif à la revendication 3, 2^{ème} alternative, ayant une première mâchoire (202) et une deuxième mâchoire (204) qui sont positionnées en vis-à-vis l'une de l'autre et qui comportent respectivement un canal de réception (206, 208) dans lequel le premier et le deuxième leviers pivotants (41, 43) peuvent entrer lors du transport de la poche de transport (7), afin d'y être accueillis, et un dispositif de rotation (210) par lequel la première mâchoire (202) et la deuxième mâchoire (204) peuvent être tournées ensemble de façon synchrone autour d'un axe de rotation (212) commun, afin de pivoter les leviers pivotants (41, 43) reçus dans les canaux de réception (206, 208) vers la position de charge.

13. Mécanisme de fermeture (200) selon la revendication 12, dans lequel le dispositif de rotation est configuré tel que la première et la deuxième mâchoires (202, 204) font un mouvement de supérieur à 90°, optionnellement de supérieur à 100°, optionnellement de supérieur à 100° et inférieur ou égal à 115° lors du pivotement du levier pivotant (41, 43) respectif.

14. Dispositif de transport suspendu (1) pour le transport suspendu d'objets (3) dans des poches de transport (7),
ayant une voie de transport (5),
une pluralité de poches de transport (7) selon l'une quelconque des revendications 1 à 11 qui sont suspendues à la voie de transport (5),
un dispositif entraîneur ayant des entraîneurs (109) qui peuvent être en prise avec les éléments de suspension (111) des poches de transport (7), afin d'amener les poches de transport (7) le long de la voie de transport (5), et
optionnellement un mécanisme de fermeture selon la revendication 12 ou 13.

15. Dispositif de transport suspendu (1) selon la revendication 14, dans lequel la poche de transport (7) est formée selon la revendication 5, dans lequel le verrou de blocage (67, 69) respectif est pourvu d'une saillie de déverrouillage (71, 73) faisant saillie latéralement, dans lequel le dispositif de transport suspendu (1) comporte en outre un dispositif de déverrouillage ayant un entraîneur de déverrouillage (75, 77) qui est configuré en forme d'une coulisse de guidage, le long de laquelle la saillie de déverrouillage (71, 73) respective peut glisser et/ou rouler lors du transport de la poche de transport à tel point que le verrou de blocage (67, 69) respectif fait un mouvement de déverrouillage.
